# EUROPEAN PATENT SPECIFICATION

(11) **EP 4 517 930 B1**
(45) Date of publication and mention of the grant of the patent: **08.04.2026**
(21) Application number: 24189528.3
(22) Date of filing: 18.07.2024
(51) Int. Cl.: H01M 10/613, H01M 10/625, H01M 10/647, H01M 10/6556, H01M 10/6567, H01M 50/209, H01M 10/6557

(54) **BATTERY PACK**
BATTERIEPACK
BLOC-BATTERIE

(30) Priority: 21.07.2023 KR 20230095515
(43) Date of publication of application: 05.03.2025
(73) Proprietor: SAMSUNG SDI CO., LTD., Giheung-gu Yongin-si, Gyeonggi-do 17084 (KR)
(72) Inventor: MOON, Soodeok, 17084 Yongin-si (KR); JI, Taeho, 17084 Yongin-si (KR); WOO, Beomjun, 17084 Yongin-si (KR)
(74) Representative: Marks & Clerk LLP

(56) References cited:
- EP-A1- 4 191 749
- CN-B- 113 178 641
- CN-U- 218 498 164
- US-A1- 2023 125 261
- US-B2- 11 476 518

## Description

### BACKGROUND

### 1. Field of the Invention

The present disclosure relates to a battery pack.

### 2. Description of the Related Art

In general, a secondary battery (or a rechargeable battery) is widely used in a mobile device, an auxiliary electric power device, or the like.

In addition, the secondary battery is also attracting attention as a main power source for an electric vehicle, a hybrid electric vehicle, a plug-in hybrid electric vehicle, or the like, which have been proposed as an alternative to solve various problems such as air pollution of a conventional gasoline or diesel vehicle.

In the electric vehicle or the like, a battery pack is formed by stacking a plurality of battery cells and then electrically connecting the battery cells in series and/or in parallel to achieve a high-output and large-capacity battery.

The plurality of battery cells are stacked in the battery pack, and terminals exposed at both ends of each battery cell are electrically connected to provide a high voltage.

However, the battery pack that generates the high voltage requires more effective cooling of the battery cell to improve driving stability during continued use of the battery pack.

CN 218 498 164 U discloses a battery pack comprising:
a plurality of battery cells,
a base plate comprising a first surface and a base flow path, wherein the plurality of battery cells is in contact with the first surface and the base flow path is configured to circulate a refrigerant to cool the plurality of battery cells, and
a frame portion comprising a plurality of frames coupled to each other at an upper side of the first surface of the base plate, the frame portion forming an accommodation space for accommodating the plurality of battery cells and a side surface flow path connected to the base flow path through which the refrigerant is configured to flow,
wherein the base plate comprises:
   a cooling plate comprising the first surface and the base flow path,
   a flow path connection portion coupled to one end of the cooling plate and connecting the side surface flow path of the frame portion and the base flow path,
   wherein
   the base flow path comprises an inflow flow path through which the refrigerant introduced through the flow path connection portion moves in a first direction inside the cooling plate and a discharge flow path in which a flow direction of the refrigerant introduced through the inflow flow path is reversed to move in a second direction opposite to the first direction,
   the inflow flow path extends along the first direction inside one side of the cooling plate to introduce the refrigerant and is connected to the discharge flow path, and the discharge flow path is connected to the inflow flow path inside the cooling plate,
   wherein the flow path connection portion comprises:
      a first connection portion coupled to the one end of the cooling plate to connect the inflow flow path to the side surface flow path of the frame portion, and
      a second connection portion coupled to the one end of the cooling plate to connect the discharge flow path to the side surface flow path of the frame portion.

The above-described information disclosed in the technology that serves as the background of the present disclosure is only for improving understanding of the background of the present disclosure and thus may include information that does not constitute the related art.

### SUMMARY

Embodiments of the present disclosure relate to a battery pack capable of cooling three surfaces of a plurality of battery cells accommodated inside a frame portion to provide more effective cooling of the battery cells.

According to the invention, the battery pack includes battery cells; a base plate including a first surface and a base flow path, wherein the battery cells are in contact with the first surface and the base flow path is configured to circulate a refrigerant to cool the battery cells; and a frame portion including frames coupled to each other at an upper side of the first surface of the base plate. The frame portion forms an accommodation space for accommodating the battery cells and a side surface flow path connected to the base flow path through which the refrigerant is configured to flow.

The base plate includes a cooling plate including the first surface and the base flow path; a flow path connection portion coupled to one end of the cooling plate and connecting the side surface flow path of the frame portion and the base flow path; and a refrigerant guiding portion coupled to another end of the cooling plate. The refrigerant guiding portion is configured to guide a flow of the refrigerant introduced into the base flow path in a discharge direction through the flow path connection portion.

The base flow path includes an inflow flow path through which the refrigerant introduced through the flow path connection portion moves in a first direction inside the cooling plate and a discharge flow path in which a flow direction of the refrigerant introduced through the inflow flow path is reversed at a position of the refrigerant guiding portion to move in a second direction opposite to the first direction, the inflow flow path extends along the first direction inside one side of the cooling plate to introduce the refrigerant and is connected to the discharge flow path at the position of the refrigerant guiding portion, and the discharge flow path is connected to the inflow flow path inside the cooling plate.

The battery pack includes a first coupling groove at the one end of the cooling plate coupled to the flow path connection portion. The first coupling groove opens a portion of each of the inflow flow path and the discharge flow path.

The flow path connection portion may include a first connection portion coupled to the one end of the cooling plate to connect the inflow flow path to the side surface flow path of the frame portion; and a second connection portion coupled to the one end of the cooling plate to connect the discharge flow path to the side surface flow path of the frame portion.

The first connection portion may include a first bending plate including one side covering the first coupling groove and another side extending in a thickness direction of the cooling plate, and a first pipe line protruding from an upper side of the first bending plate and extending into the frame portion and connecting the inflow flow path and the side surface flow path. The second connection portion may include a second bending plate including one side covering the first coupling groove and another side extending in the thickness direction of the cooling plate, and a second pipe line protruding from an upper side of the second bending plate and extending into the frame portion and connecting the inflow flow path and the side surface flow path.

The battery pack may include a second coupling groove at another end of the cooling plate. The second coupling groove is coupled to the refrigerant guiding portion and opens a portion of each of the inflow flow path and the discharge flow path.

The refrigerant guiding portion may include a second bending plate including one side covering the second coupling groove and another side extending in a thickness direction of the cooling plate.

The frame portion may include a composite frame coupled to one edge of the base plate in which the first side surface flow path is inside the composite frame and the first side surface flow path is connected to the first connection portion and the second connection portion to supply the refrigerant; an end frame coupled to the another edge of the base plate; a first side frame having each end connected to one end of each of the composite frame and the end frame; and a second side frame having each end connected to another end of each of the composite frame and the end frame.

The battery pack may include a gas discharge portion in the composite frame configured to discharge a gas generated from one of the battery cells in which the gas discharge portion includes a gas inflow portion on a first side surface of the composite frame and through which the gas generated from the one of the battery cells is introduced and a gas venting portion at the composite frame through which the gas introduced into the gas inflow portion is discharged to the outside.

An inside of the composite frame may be divided into a first region and a second region in which the first side surface flow path is at the first region, and in which the gas venting portion is at the second region.

The gas venting portion may include a venting unit protruding from a second side surface facing the first side surface of the composite frame and a guiding portion protruding from an inner wall surface of the second region inside the composite frame. The venting unit is configured to discharge the gas and the guiding portion is configured to guide the gas toward the venting unit.

The frame portion may include a side surface cooling frame in contact with side surfaces of the plurality of battery cells.

One side of the side surface cooling frame may be connected to the first side surface flow path of the composite frame in which another side of the side surface cooling frame extends in a direction toward the end frame, and in which a second side surface flow path through which the refrigerant flows is inside the side surface cooling frame.

The first side surface flow path may include an upper flow path connected to the first pipe line and a lower flow path connected to the second pipe line, and the second side surface flow path may include a side surface upper flow path extending in a length direction inside the side surface cooling frame and connected to the upper flow path of the composite frame and a side surface lower flow path extending in the length direction inside the side surface cooling frame and at a lower portion of the side surface upper flow path to be connected to the lower flow path of the composite frame.

The battery pack may include a side surface refrigerant guiding portion at another side of the side surface cooling frame in which the side surface refrigerant guiding portion is configured to change a flow direction of the refrigerant flowing through the side surface upper flow path to a direction of the side surface lower flow path.

The inflow flow path may include a first inflow flow path extending along the first direction at one side of the cooling plate to introduce the refrigerant and connected to the discharge flow path and a second inflow flow path extending along the first direction at another side of the cooling plate to introduce the refrigerant and connected to the discharge flow path, and in which the discharge flow path includes a first discharge flow path extending along the first direction between the first inflow flow path and the second inflow flow path inside the cooling plate and connected to the first inflow flow path to discharge the refrigerant and a second discharge flow path extending along the first direction between the first inflow flow path and the second inflow flow path inside the cooling plate and connected to the second inflow flow path to discharge the refrigerant.

The flow path connection portion may include a first connection portion coupled to the one end of the cooling plate to connect the first inflow flow path and the second inflow flow path to the side surface flow path of the frame portion; and a second connection portion coupled to the one end of the cooling plate to connect the first discharge flow path and the second discharge flow path to the side surface flow path of the frame portion.

The inflow flow path may include a first inflow flow path extending along the first direction inside one edge portion of the cooling plate so that the refrigerant is introduced and connected to the discharge flow path, a second inflow flow path extending along the first direction inside an edge portion of another side of the cooling plate so that the refrigerant is introduced and connected to the discharge flow path, and a common inflow flow path comprising two flow paths extending along the first direction inside the cooling plate between the first inflow flow path and the second inflow flow path and connected to the discharge flow path. The discharge flow path may include a first common discharge flow path extending along the first direction inside the cooling plate between the first inflow flow path and the common inflow flow path and connected to each of the first inflow flow path and the common inflow flow path to discharge the refrigerant and a second common discharge flow path extending along the first direction inside the cooling plate between the second inflow flow path and the common inflow flow path and connected to each of the second inflow flow path and the common inflow flow path to discharge the refrigerant.

The flow path connection portion may include a first connection portion coupled to the one end of the cooling plate to connect the first inflow flow path, the second inflow flow path, and the common inflow flow path to the side surface flow path of the frame portion; and a second connection portion coupled to the one end of the cooling plate to connect the first common discharge flow path and the second common discharge flow path to the side surface flow path of the frame portion.

According to the embodiments of the present disclosure, three surfaces of a lower portion and a side surface of a battery cell may be effectively cooled in a state in which a plurality of battery cells including the battery cell are accommodated inside a frame portion. Cooling the battery cells is configured to extend usage lifespan of the battery pack and improve the durability of the battery pack.

### BRIEF DESCRIPTION OF THE DRAWINGS

FIG. 1 is a perspective view schematically showing a battery pack according to a first embodiment of the present disclosure.
FIG. 2 is an exploded perspective view schematically showing the battery pack of FIG. 1.
FIG. 3 is a main portion exploded perspective view schematically showing a base plate according to the first embodiment of the present disclosure.
FIG. 4 is a plan view schematically showing the base plate of FIG. 3.
FIG. 5 is a perspective view schematically showing a flow path connection portion according to the first embodiment of the present disclosure.
FIG. 6 is a perspective view schematically showing a refrigerant guiding portion according to the first embodiment of the present disclosure.
FIG. 7 is a cross-sectional view schematically showing a composite frame according to the first embodiment of the present disclosure.
FIG. 8 is a cross-sectional view cut along a line A-A installed at the composite frame of FIG. 1.
FIG. 9 is a cross-sectional view cut along a line B-B of FIG. 1.
FIG. 10 is a perspective view schematically showing a side surface cooling frame according to the first embodiment of the present disclosure.
FIG. 11 is a main portion exploded perspective view schematically showing in a state in which a first plug, a second plug, and a side surface refrigerant guiding portion of the side surface cooling frame of FIG. 10 are separated.
FIG. 12 is a cross-sectional view schematically showing the side surface cooling frame of FIG. 10.
FIG. 13 is a perspective view schematically showing a battery pack according to a second embodiment of the present disclosure.
FIG. 14 is an exploded perspective view schematically showing the battery pack of FIG. 13.
FIG. 15 is a plan view schematically showing a base plate of FIG. 13.
FIG. 16 is a main portion cross-sectional view that is cut along a line C-C of FIG. 13 and schematically shows a state in which a composite frame and the base plate are connected by a flow path connection portion.
FIG. 17 is a main portion cross-sectional view cut along a line D-D of FIG. 13.
FIG. 18 is a perspective view schematically showing a battery pack according to a third embodiment of the present disclosure.
FIG. 19 is an exploded perspective view schematically showing the battery pack of FIG. 18.
FIG. 20 is a plan view schematically showing a base plate of FIG. 18.
FIG. 21 is a main portion cross-sectional view that is cut along a line F-F of FIG. 18 and schematically shows a state in which a composite frame and the base plate are connected by a flow path connection portion.
FIG. 22 is a main portion cross-sectional view cut along a line F-F of FIG. 18.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the claims. The drawings and description are to be regarded as illustrative in nature and not restrictive. Like reference numerals designate like elements throughout the specification.

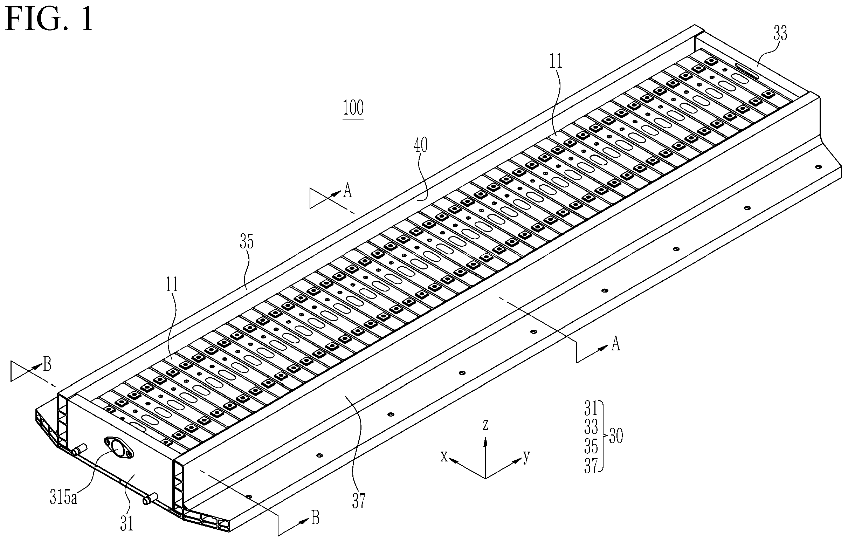

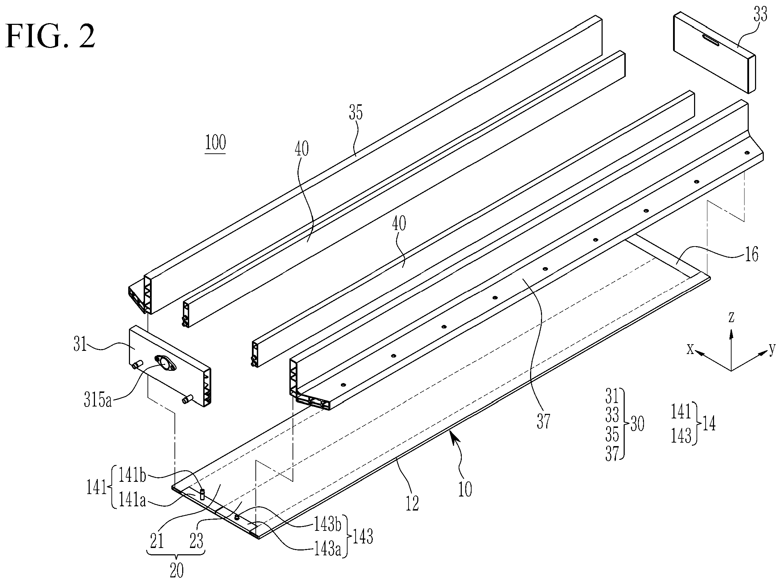

FIG. 1 is a perspective view schematically showing a battery pack according to a first embodiment of the present disclosure, and FIG. 2 is an exploded perspective view schematically showing the battery pack of FIG. 1.

As shown in FIG. 1 and FIG. 2, the battery pack 100 according to the first embodiment of the present disclosure includes a base plate 10 in which a plurality of battery cells 11 are in contact with a first surface and a base flow path 20 through which a refrigerant that cools the battery cells 11 circulates. The battery pack 100 also includes a frame portion 30 in which a plurality of frames are coupled to each other at an upper side of the first surface of the base plate 10 to form an accommodation space for accommodating the battery cells 11. The frame portion 30 includes a side surface flow path through which the refrigerant flows in and out by being connected to the base flow path 20.

The plurality of battery cells 11 may include a secondary battery that is configured to repeatedly perform charging and discharging operations.

The plurality of battery cells 11 are accommodated inside frame portions 30 in a state in which a lower surface of each of the battery cells 11 is in contact with the first surface that is an upper surface of the base plate 10.

The plurality of battery cells 11 may be cooled to an appropriate temperature by the refrigerant flowing along the base flow path 20 formed inside the base plate 10 while the lower surface of each of the battery cells 11 is supported by the base plate 10.

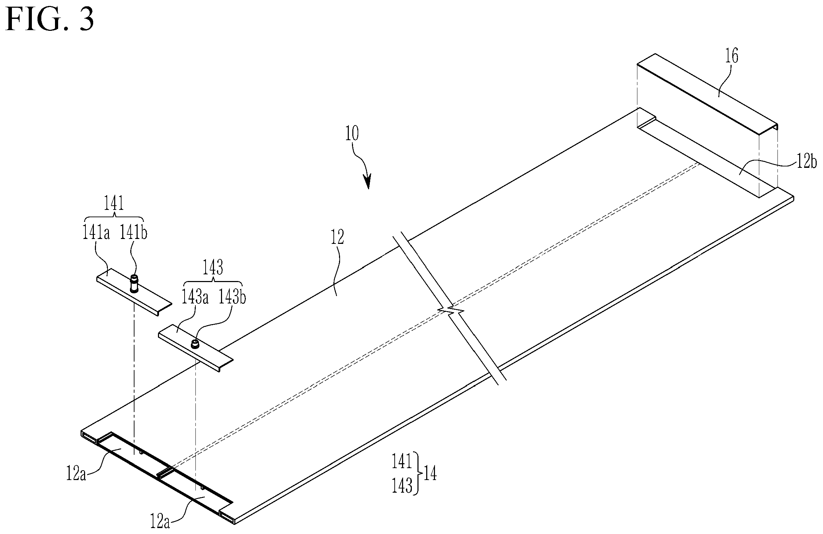

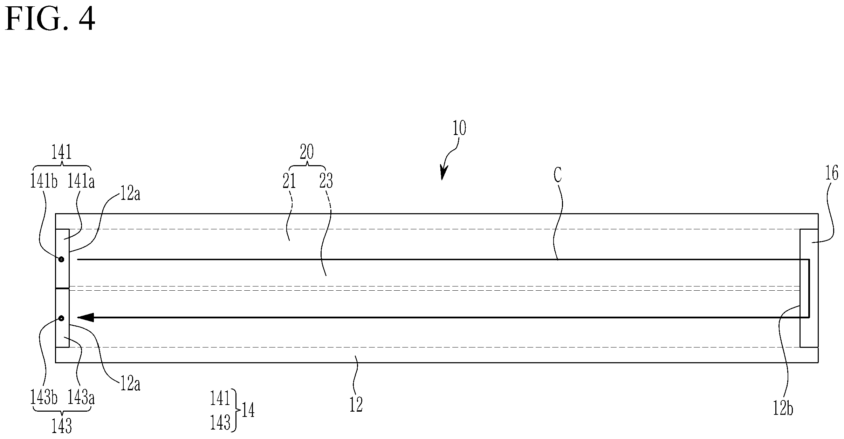

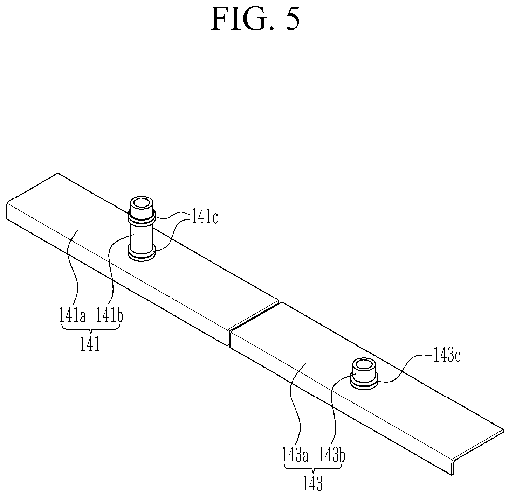

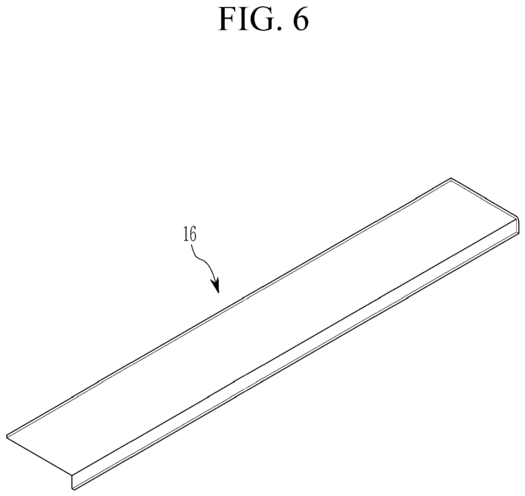

FIG. 3 is an exploded perspective view schematically showing the base plate 10 according to the first embodiment of the present disclosure, FIG. 4 is a plan view schematically showing the base plate of FIG. 3, FIG. 5 is a perspective view schematically showing a flow path connection portion according to the first embodiment of the present disclosure, and FIG. 6 is a perspective view schematically showing a refrigerant guiding portion according to the first embodiment of the present disclosure.

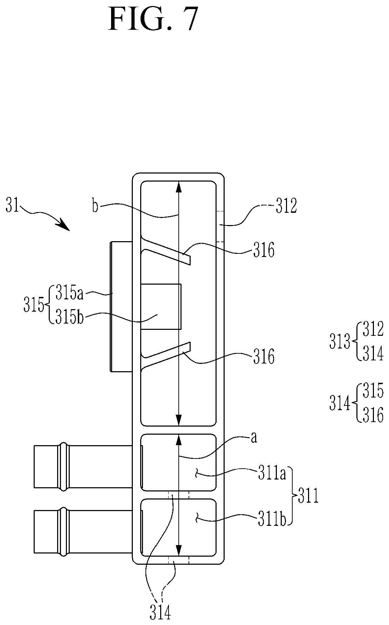

Referring to FIGS. 3 to 6, the base plate 10 includes a cooling plate 12 in which the plurality of battery cells 11 are in contact with a first surface and the base flow path 20 is formed. The flow path connection portion 14 is coupled to one end of the cooling plate 12 and connecting to a first side surface flow path 311 (see FIG. 7) of the frame portion 30 and the base flow path 20. A refrigerant guiding portion 16 is coupled to the other end of the cooling plate 12 and is configured to guide a flow of the refrigerant introduced into the base flow path 20 in a discharge direction through the flow path connection portion 14.

The cooling plate 12 may have a rectangular planar shape with a length in a first direction (a y-axis) to support the plurality of battery cells 11 arranged in the first direction on the first surface of the cooling plate 12. A shape of the cooling plate 12 is not necessarily limited to the rectangular planar shape, and may have any other suitable shape depending on the number and arrangement of the battery cells 11.

The base flow path 20 for cooling the battery cell 11 is inside the cooling plate 12.

The base flow path 20 includes an inflow flow path 21 through which the refrigerant flows inward (or is introduced) through the flow path connection portion 14 and flows in the first direction (the Y-axis direction) inside the cooling plate 12, and a discharge flow path 23 through which the refrigerant is discharged by switching a flow direction of the refrigerant at a position of the refrigerant guiding portion 16.

The inflow flow path 21 is inside the cooling plate 12 and may have a length direction along one edge of the cooling plate 12.

The inflow flow path 21 may be a single flow path inside the cooling plate 12 and is configured such that the refrigerant C flowing in through the flow path connection portion 14 (that will be described later) flows along the first direction.

The refrigerant C of FIG. 4 is supplied to the inside of the inflow flow path 21 through the flow path connection portion 14 at one end of the cooling plate 12. A configuration of the flow path connection portion 14 according to one embodiment will be described in more detail below.

The inflow flow path 21 is connected to the discharge flow path 23 inside the cooling plate 12 to enable circulation of the refrigerant C.

The discharge flow path 23 is connected to the inflow flow path 21 at the other end of the cooling plate 12, and is connected to the inflow flow path 21 at a position of the refrigerant guiding portion 16 at the other end of the cooling plate 12.

The refrigerant C is introduced through the inflow flow path 21 and the flow of the refrigerant C changes direction at a position of the refrigerant guiding portion 16 such that the refrigerant C is discharged through the discharge flow path 23.

The flow path connection portion 14 is coupled to one end of the cooling plate 12.

The flow path connection portion 14 is coupled to the one end of the cooling plate 12 to connect the inflow flow path 21 and the discharge flow path 23 of the cooling plate 12 to the first side surface flow path 311 (see FIGS. 7-8) of the frame portion 30.

In one or more embodiments, the flow path connection portion 14 may include a first connection portion 141 coupled to the one end of the cooling plate 12 to connect the inflow flow path 21 to the first side surface flow path 311 of the frame portion 30, and a second connection portion 143 coupled to the same end of the cooling plate 12 to connect the discharge flow path 23 to the side surface flow path 311 of the frame portion 30.

A first coupling groove 12a (see FIG. 3) may be at the one end of the cooling plate 12 to connect the first connection portion 141 and the second connection portion 143.

The first coupling groove 12a may be configured such that a portion of each end of the inflow flow path 21 and the discharge flow path 23 is open facing upward (e.g., in the Z-axis direction).

The first connection portion 141 may include a first bending plate 141a that covers the first coupling groove 12a, and a first pipe line 141b that protrudes upward from the first bending plate 141a to be connected to the first side surface flow path 311 of a composite frame 31.

One side of the first bending plate 141a may cover the first coupling groove 12a, and the other side of the first bending plate 141a may be bent to extend in a thickness direction (downward in the Z-axis direction) of the cooling plate 12. The first bending plate 141a may be coupled to the first coupling groove 12a by a fastening member, an adhesive, or the like.

The first pipe line 141b may protrude upward from an upper portion of the first bending plate 141a.

The first pipe line 141b may protrude upward from the upper portion of the first bending plate 141a to be connected to the first side surface flow path 311 in the composite frame 31 of the frame portion 30. The first side surface flow path 311 may include an upper flow path 311a and a lower flow path 311b, and the first pipe line 141b may be connected to the upper flow path 311a. This will be described in more detail below with respect to the description of the frame portion 30.

In one or more embodiments, the first pipe line 141b may be connected to the first side surface flow path 311 in the composite frame 31 of the frame portion 30 (which will be described later) such that the refrigerant C flowing along the first side surface flow path 311 is stably connected to the inflow flow path 21 inside the cooling plate 12.

A first sealing member 141c may be at an outer surface of the first pipe line 141b.

The first sealing member 141c may be on the outside of the first pipe line 141b to prevent (or at least mitigate) the refrigerant C from leaking to the outside.

The first sealing member 141c may include a plurality of first sealing members on the outer surface of the first pipe line 141b.

In one or more embodiments, the first sealing member 141c may include a pair of first sealing members at positions spaced apart from each other (e.g., at upper and lower positions of the first pipe line 141b). In an embodiment in which the first sealing member 141c includes a pair of first sealing members at upper and lower positions of the first pipe line 141b and the first pipe line 141b is longer than a length of the second pipe line 143b, the refrigerant C may be more effectively prevented from leaking to the outside from.

In one or more embodiments, the second connection portion 143 may be coupled at one end of the cooling plate 12 (e.g., the same end of the cooling plate 12 as the first connection portion) to connect the discharge flow path 23 to the first side surface flow path 311 of the frame portion 30.

The second connection portion 143 may include a second bending plate 143a that covers the first coupling groove 12a at the discharge flow path 23, and a second pipe line 143b that protrudes upward from the second bending plate 143a to be connected to the first side surface flow path 311.

One side of the second bending plate 143a may cover the first coupling groove 12a formed at the discharge flow path 23, and the other side of the second bending plate 143a may be bent to extend in a thickness direction (downward in the Z-axis direction) of the cooling plate 12. The second bending plate 143a may be coupled to the first coupling groove 12a by a fastening member, an adhesive, or the like.

The second pipe line 143b may protrude upward from an upper portion of the second bending plate 143a to be connected to the first side surface flow path 311 in the composite frame 31 of the frame portion 30. The first side surface flow path 311 may include the upper flow path 311a and the lower flow path 311b, and the second pipe line 143b may be connected to the lower flow path 311b. This will be described in more detail below with respect to the description of the frame portion 30.

The second sealing member 143c may be a single piece on an outer surface of the second pipe line 143b. In an embodiment in which the first pipe line 141b has a length shorter than a length of the second pipe line 143b, the second sealing member 143c may be a single piece on the outer surface of the second pipe line 143b to prevent (or at least mitigate) leakage of the refrigerant C.

In one or more embodiments, the refrigerant may be circularly supplied (closed loop) from the frame portion 30 toward the cooling plate 12 by the flow path connection portion 14 including the first connection portion 141 and the second connection portion 143.

The refrigerant C is introduced through the inlet flow path 21 to be circularly discharged through the discharge flow path 23, and the refrigerant guiding portion 16 is located at a connected portion (e.g., a junction) of the inflow flow path 21 and the discharge flow path 23 for the circulating supply.

In one or more embodiments, a second coupling groove 12b (see FIG. 3) coupled to the refrigerant guiding portion 16 by opening or exposing a portion of the inflow flow path 21 and a portion of the discharge flow path 23 may be located at the other end (i.e., the opposite end) of the cooling plate 12.

One side of the refrigerant guiding portion 16 may cover the second coupling groove 12b, and the other side of the refrigerant guiding portion 16 may be bent to be used (or applied) as a third bending plate extending in a thickness direction (the Z-axis direction) of the cooling plate 12.

The second bending plate 143a may be coupled to the second coupling groove 12b at the end of the cooling plate 12 opposite to the first coupling groove 12a, and may be coupled to the second coupling groove 12b at each of the inflow flow path 21 and the discharge flow path 23.

In one or more embodiments, as the refrigerant moves through the inflow flow path 21, the refrigerant may hit the second bending plate 143a so that a flow direction of the refrigerant is changed. Thus, the refrigerant may stably move in a direction of the discharge flow path 23.

The frame portion 30 is coupled to an upper portion of the base plate 10 to accommodate the plurality of battery cells 11.

In one or more embodiments, the frame portion 30 may include the composite frame 31, an end frame 33, and a first side frame 35 and a second side frame 37 connecting the composite frame 31 and the end frame 33, respectively. Each of the composite frame 31, the end frame 33, the first side frame 35, and the second side frame 37 are coupled to the upper portion of the base plate 10.

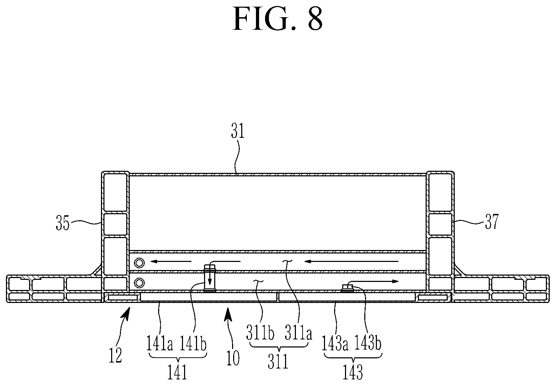

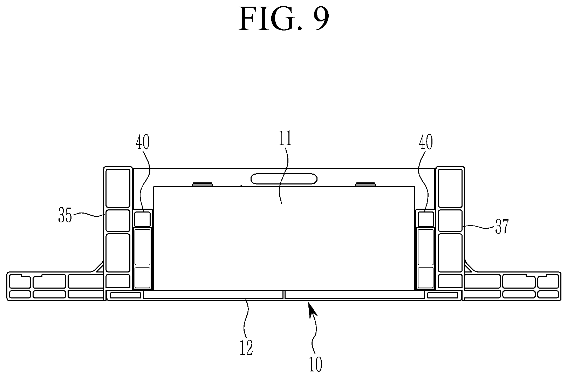

FIG. 7 is a cross-sectional view schematically showing the composite frame 31 according to the first embodiment of the present disclosure, FIG. 8 is a cross-sectional view cut along a line A-A installed at the composite frame 31 of FIG. 1, and FIG. 9 is a cross-sectional view cut along a line B-B of FIG. 1.

As shown in FIGS. 7 to 9, the composite frame 31 may be coupled to one edge of the base plate 10, and the first side surface flow path 311 may be inside the composite frame 31 to be connected to the first connection portion 141 and the second connection portion 143 so that the first side surface flow path 311 is configured to supply the refrigerant.

The first side surface flow path 311 may be inside the composite frame 31 to supply the refrigerant to the first connection portion 141 and the second connection portion 143.

The first side surface flow path 311 may include the upper flow path 311a to which the first pipe line 141b is connected, and the lower flow path 311b to which the second pipe line 143b is connected.

The upper flow path 311a may be a portion configured to introduce the refrigerant (or a coolant), and may be formed by dividing (or partitioning) a portion of the inside of the composite frame 31. The upper flow path 311a may be connected to the first pipe line 141b to enable supply of the refrigerant.

The lower flow path 311b may be below the upper flow path 311a inside the composite frame 31, and may be configured to provide a space through which the refrigerant flowing along the discharge flow path 23 may be discharged.

In one or more embodiments, a gas discharge portion 313 for discharging a gas generated from the battery cells 11 may be inside the composite frame 31.

The gas discharge portion 313 may include a gas inflow portion 312 on a first side surface of the composite frame 31 and through which the gas generated from the battery cell(s) 11 is introduced, and a gas venting portion 314 at the composite frame 31 and through which a gas introduced through the gas inflow portion 312 is discharged to the outside.

The gas inflow portion 312 may be at the first side surface where one of the battery cells 11 is in surface contact at an upper side of the first side surface flow path 311 in the composite frame 31, and the gas inflow portion 312 may be a gas inflow hole through which a portion of the first side surface is penetrated.

The inside of the composite frame 31 may be divided into a first region "a" and a second region "b", as shown in FIG. 7. The first side surface flow path 311 may be at the first region "a", and the gas venting portion 314 may be at the second region "b".

The gas venting portion 314 may include a venting unit (or a venting portion) 315 protruding from a second side surface facing the first side surface of the composite frame 31 to discharge the gas, and a guiding portion (or a guide portion) 316 protruding from an inner wall surface of the second region b inside the composite frame 31 to guide the gas toward the venting unit 315. The guiding portion 316 may be around (e.g., surrounding) the venting unit 315.

The venting unit 315 may be detachably coupled to the second side surface of the composite frame 31, and may be configured such that the gas discharged from the battery cell(s) 11 and introduced into the gas inflow portion 312 may be easily discharged to the outside.

The venting unit 315 may include a venting body 315a coupled to the second side surface of the composite frame 31, and a venting protruding portion 315b protruding from a side surface of the venting body 315a into the second region b and having a venting flow path formed therein.

The gas introduced through the gas inflow portion 312 may be guided by the guiding portion 316 to pass through the venting protruding portion 315b such that the gas is discharged to the outside.

The guiding portion 316 may protrude inside the composite frame 31 at a position where the venting unit 315 is located.

The guiding portion 316 may obliquely protrude into the second region b from an inner wall surface of the composite frame 31 at a location where the venting unit 315 is located. The guiding portion 316 is configured such that the gas introduced through the gas inflow portion 312 easily moves to the venting unit 315.

The guiding portion 316 may protrude from the inner wall surface of the composite frame 31 with the venting protruding portion 315b inside the guiding portion 316. The guiding portion 316 may be or include a cone-shaped guide protruding portion with an open end portion. The guiding portion 316 may taper in a direction extending away from the inner wall surface of the composite frame 31 on which the venting unit 315 is located.

In one or more embodiments, the end frame 33 may be coupled to the other edge of the base plate 10.

The first side frame 35 may be configured such that both ends of the first side frame 35 are connected to one end of each of the composite frame 31 and the end frame 33.

Both ends of the second side frame 37 may be connected to the other end of each of the composite frame 31 and the end frame 33.

In one or more embodiments, a side surface cooling frame 40 that is in contact with a side surface of the plurality of battery cells 11 may be provided along at least a portion of the frame portion 30.

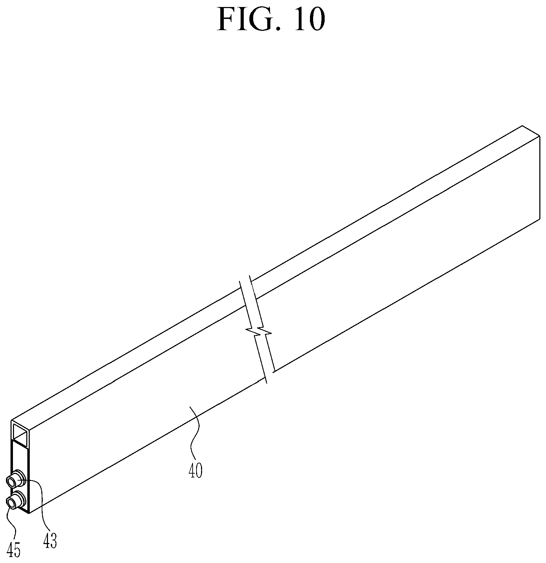

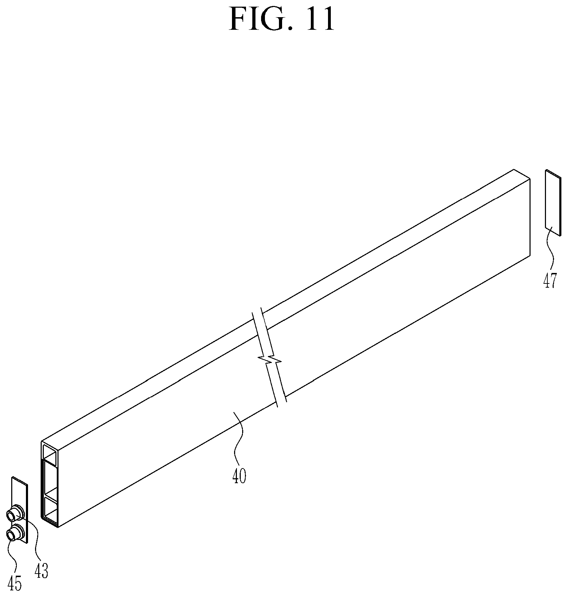

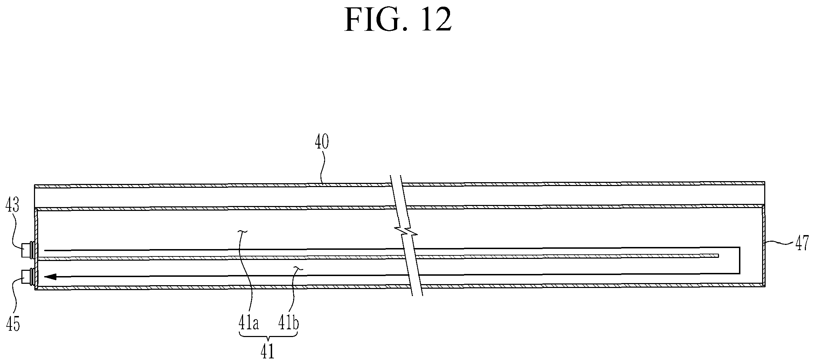

FIG. 10 is a perspective view schematically showing the side surface cooling frame 40 according to the first embodiment of the present disclosure, FIG. 11 is an exploded perspective view schematically showing a state in which a first plug, a second plug, and a side surface refrigerant guiding portion of the side surface cooling frame 40 of FIG. 10 are separated, and FIG. 12 is a cross-sectional view schematically showing the side surface cooling frame 40 of FIG. 10.

As shown in FIGS. 1 to 12, the assembly may include a plurality of side surface cooling frames 40 spaced apart from each other at the frame portion 30, and the side surface cooling frames 40 may be configured to cool the battery cells 11 by contacting the side surface of the plurality of battery cells 11 accommodated inside the frame portion 30.

One side of the side surface cooling frame 40 may be connected to the first side surface flow path 311 of the composite frame 31, the other side of the side surface cooling frame 40 may extend in a direction toward the end frame 33, and the second side surface flow path 41 through which the refrigerant flows may be inside the side surface cooling frame 40.

The second side surface flow path 41 may include a side surface upper flow path 41a extending in a lengthwise direction (the Y-axis direction) inside the side surface cooling frame 40 and connected to the upper flow path 311a of the composite frame 31, and a side surface lower flow path 41b extending in the lengthwise direction (the Y-axis direction) inside the side surface cooling frame 40 and at a lower portion of the side surface upper flow path 41a to be connected to the lower flow path 311b of the composite frame 31.

In one or more embodiments, the refrigerant may be supplied from the frame portion 30 to the side surface upper flow path 41a to circulate in the side surface lower flow path 41b.

The first plug 43 connecting the side surface upper flow path 41a to the upper flow path 311a of the composite frame 31 and the second plug 45 connecting the side surface lower flow path 41b to the lower flow path 311b of the composite frame 31 may be installed at one side of the side surface cooling frame 40.

The first plug 43 may pass through a side surface of the composite frame 31 to be connected to the upper flow path 311a. In one or more embodiments, the refrigerant flowing along the upper flow path 311a of the composite frame 31 may be introduced into the side surface upper flow path 41a of the side surface cooling frame 40 through the first plug 43.

The second plug 45 may pass through the side surface of the composite frame 31 to be connected to the lower flow path 311b. In one or more embodiments, the refrigerant flowing through the side surface upper flow path 41a may be introduced into the lower flow path 311b through the second plug 45.

In one or more embodiments, the side surface refrigerant guiding portion 47 may be at the other side of the side surface cooling frame 40.

The side surface refrigerant guiding portion 47 may be coupled to the other side of the side surface cooling frame 40 as a plate shape, and may be configured to contact each of the side surface upper flow path 41a and the side surface lower flow path 41b.

In one or more embodiments, the refrigerant may be introduced from the side surface upper flow path 41a to hit the side surface refrigerant guiding portion 47 such that a flow direction of the refrigerant is changed. In this manner, the refrigerant may circulate to the side surface lower flow path 41b.

As described above, the battery pack 100 of the present embodiment may effectively cool three surfaces of a lower portion and a side surface of the battery cell 11 in a configuration in which the plurality of battery cells 11 including the battery cell are accommodated inside the frame portion 30. Cooling the battery cells 11 is configured to extend usage lifespan of the battery pack and improve durability of the battery pack.

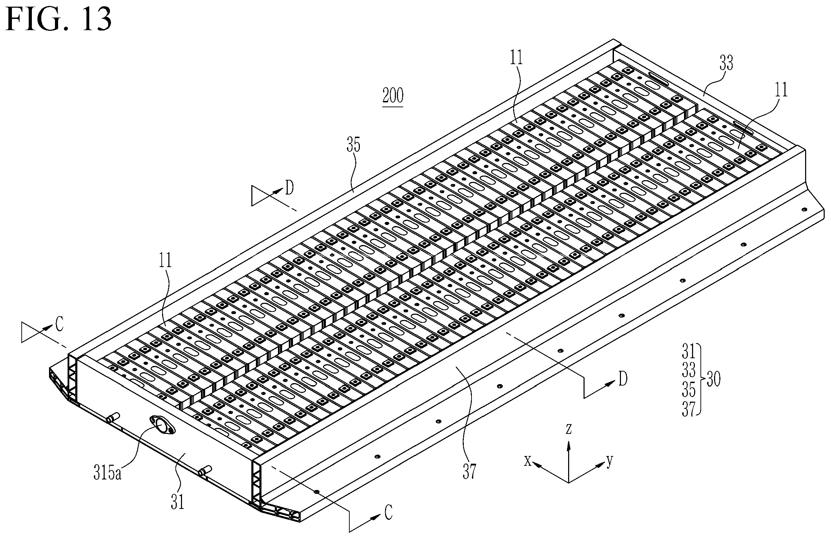

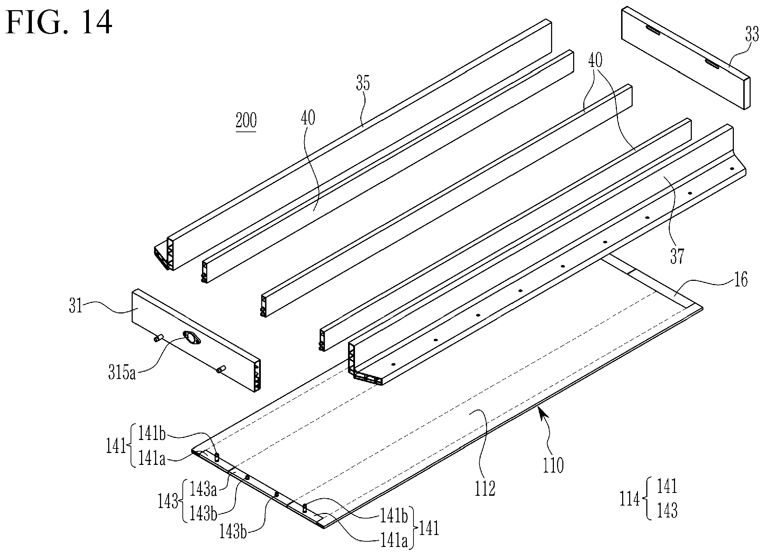

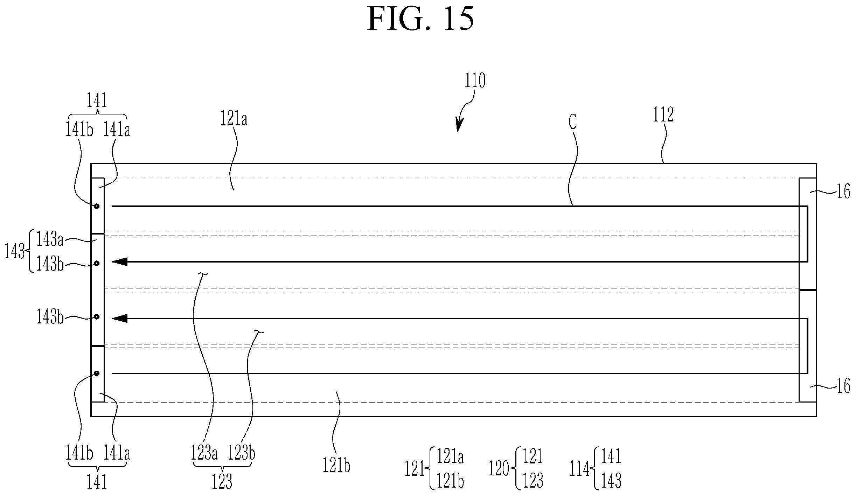

FIG. 13 is a perspective view schematically showing a battery pack according to a second embodiment of the present disclosure, FIG. 14 is an exploded perspective view schematically showing the battery pack of FIG. 13, and FIG. 15 is a plan view schematically showing a base plate of FIG. 13. The same reference numeral as that in FIGS. 1 to 12 denotes the same or similar member having the same or similar function. Hereinafter, a detailed description of the same reference numerals is omitted.

As shown in FIGS. 13 to 15, the base plate 110 of the battery pack 200 according to the second embodiment of the present disclosure includes a cooling plate 112 in which the plurality of battery cells 11 are in contact with a first surface of the cooling plate 112. A base flow path 120 is formed in the cooling plate 112. A flow path connection portion 114 is coupled to one end of the cooling plate 112 and connects the first side surface flow path 311 of the frame portion 30 and the base flow path 120. The refrigerant guiding portion 16 is coupled to the other end of the cooling plate 112 and is configured to guide a flow of the refrigerant introduced into the base flow path 120 in a discharge direction through the flow path connection portion 114.

The base flow path 120 includes an inflow flow path 121 through which the refrigerant flows inward (or is introduced) through the flow path connection portion 114 and flows in a first direction (e.g., the Y-axis direction) inside the cooling plate 112. The base flow path 120 also includes a discharge flow path 123 in which a flow direction of the refrigerant introduced through the inflow flow path 121 is changed at a position of the refrigerant guiding portion 16 to move in a second direction that is a reverse direction (i.e., the opposite direction) to the first direction.

The inflow flow path 121 may include a first inflow flow path 121a extending along the first direction inside one side of the cooling plate 112 to introduce the refrigerant and connected to the discharge flow path 123, and a second inflow flow path 121b extending along the first direction inside the other side of the cooling plate 112 to introduce the refrigerant and connected to the discharge flow path 123.

The first inflow flow path 121a may extend along one edge of the cooling plate 112, may be arranged lengthwise along the first direction inside the cooling plate 112, and may be configured such that the refrigerant introduced through the flow path connection portion 114 flows along the first direction (i.e., the Y-axis direction).

The first inflow flow path 121a may be connected to the discharge flow path 123 inside the cooling plate 112 to enable circulation of the refrigerant C.

The second inflow flow path 121b may extend along the other edge of the cooling plate 112, may be arranged lengthwise along the first direction inside the cooling plate 112, and may be configured such that the refrigerant introduced through the flow path connection portion 114 flows along the first direction.

The second inflow flow path 121b may be connected to the discharge flow path 123 inside the cooling plate 112 to enable circulation of the refrigerant C.

The discharge flow path 123 is inside the cooling plate 112, and is connected to each of the first inflow flow path 121a and the second inflow flow path 121b at a position of the refrigerant guiding portion 16 to enable circulation of the refrigerant.

In one or more embodiments, the discharge flow path 123 may include a first discharge flow path 123a and a second discharge flow path 123b inside the cooling plate 112 and between the first inflow flow path 121a and the second inflow flow path 121b.

The first discharge flow path 123a may extend along the first direction between the first inflow flow path 121a and the second inflow flow path 121b inside the cooling plate 112, and the first discharge flow path 123a may be connected to the first inflow flow path 121a to circulate and discharge the refrigerant.

The second discharge flow path 123b may extend along the first direction between the first inflow flow path 121a and the second inflow flow path 121b inside the cooling plate 112, and the second discharge flow path 123b may be connected to the second inflow flow path 121b to circulate and discharge the refrigerant.

In one or more embodiments, the refrigerant C may be introduced through the first inflow flow path 121a and the second inflow flow path 121b such that a flow direction of the refrigerant is changed (e.g., reversed) at a position of the refrigerant guiding portion 16 to circulate and discharge the refrigerant through the first discharge flow path 123a and the second discharge flow path 123b.

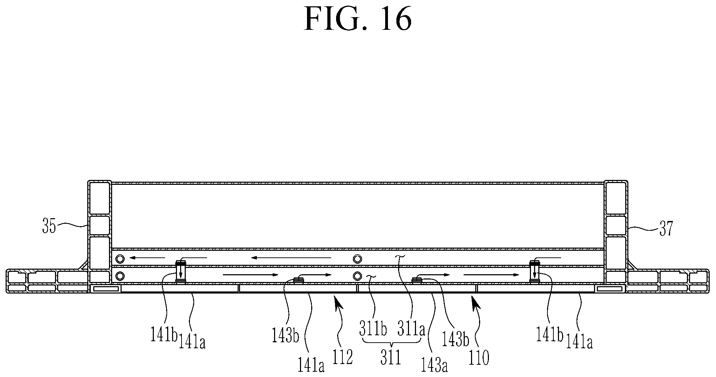

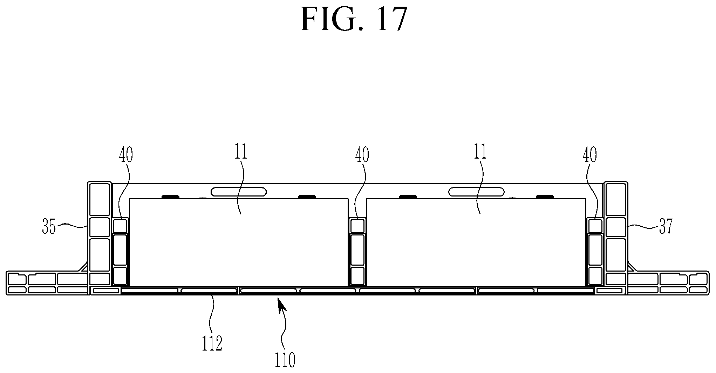

FIG. 16 is a cross-sectional view cut along a line C-C of FIG. 13 and schematically shows a state in which the composite frame and the base plate are connected by the flow path connection portion, and FIG. 17 is a cross-sectional view cut along a line D-D of FIG. 13.

Referring to FIG. 16 and FIG. 17, the flow path connection portion 114 may include the first connection portion 141 coupled to one end of the cooling plate 112 to connect the first inflow flow path 121a and the second inflow flow path 121b to the first side surface flow path 311 of the composite frame 31 of the frame portion 30. The flow path connection portion 114 may also include the second connection portion 143 coupled to one end of the cooling plate 112 to connect the first discharge flow path 123a and the second discharge flow path 123b to the side surface flow path of the frame portion 30.

The first connection portion 141 may be coupled to the first coupling groove 12a at the first inflow flow path 121a and the second inflow flow path 121b inside the cooling plate 112 such that the first connection portion 141 is connected to the upper flow path 311a of the composite frame 31.

The first connection portion 141 may include the first bending plate 141a in which one side covers the first coupling groove 12a and the other side is bent to extend in a thickness direction (the Z-axis direction) of the cooling plate 112, and the first pipe line 141b that protrudes upward from the first bending plate 141a and extends into the inside of the composite frame 31 to connect the first and second inflow flow paths 121a and 121b and the upper flow path 311a.

One side of the first bending plates 141a may cover the first coupling groove 12a at each of the first inflow flow path 121a and the second inflow flow path 121b, and the other side of the first bending plates 141a may be bent downward to extend in a thickness direction (the Z-axis direction) of the cooling plate 112.

The first pipe line 141b may protrude upward from an upper side of the first bending plate 141a and extend into the frame portion 30 such that the first pipe line 141b connects the first and second inflow flow paths 121a and 121b to the first side surface flow path 311 of the composite frame 31.

The second connection portion 143 may be coupled to one end of the cooling plate 112 to connect the first discharge flow path 123a and the second discharge flow path 123b to the lower flow path 311b of the composite frame 31.

The second connection portion 143 may include the second bending plate 143a in which one side covers the first coupling groove 12a and the other side is bent downward to extend in a thickness direction (the Z-axis direction) of the cooling plate 112, and the second pipe line 143b that protrudes upward from the second bending plate 143a and extends into the inside of the composite frame 31 to connect the first discharge flow path 123a and the second discharge flow path 123b to the lower flow path 311b of the composite frame 31.

One side of the second bending plate 143a may cover the first coupling groove 12a formed at each of the first discharge flow path 123a and the second discharge flow path 123b, and the other side of the second bending plate 143a may be bent downward to extend in a thickness direction (the Z-axis direction) of the cooling plate 112.

The second pipe line 143b may protrude upward from an upper side of the second bending plate 143a and extend into the frame portion 30. The second pipe line 143b may connect the first and second discharge flow paths 123a and 123b to the lower flow path 311b of the first side surface flow path 311.

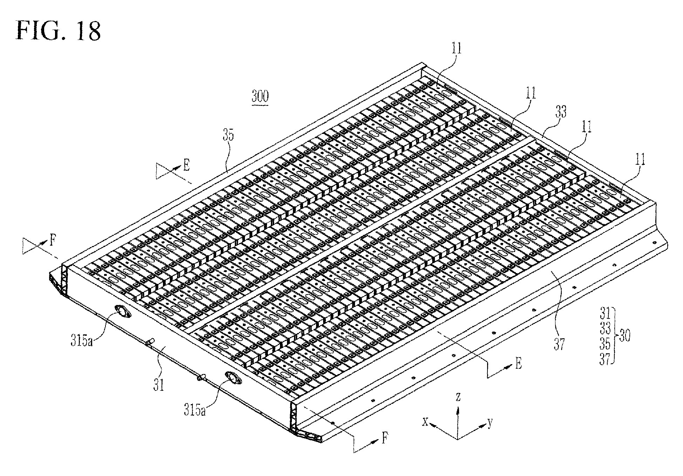

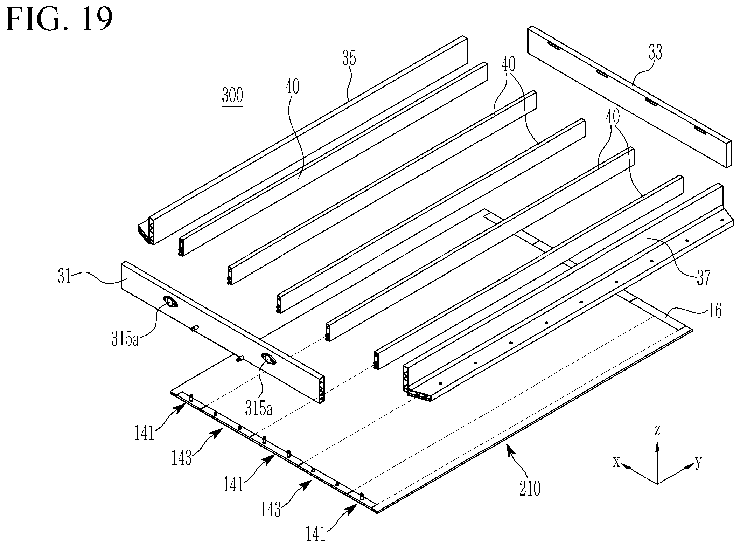

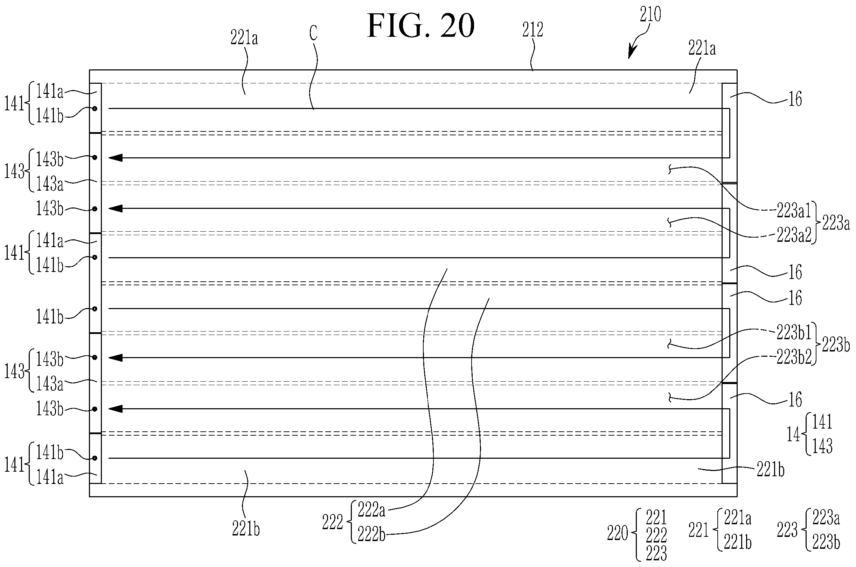

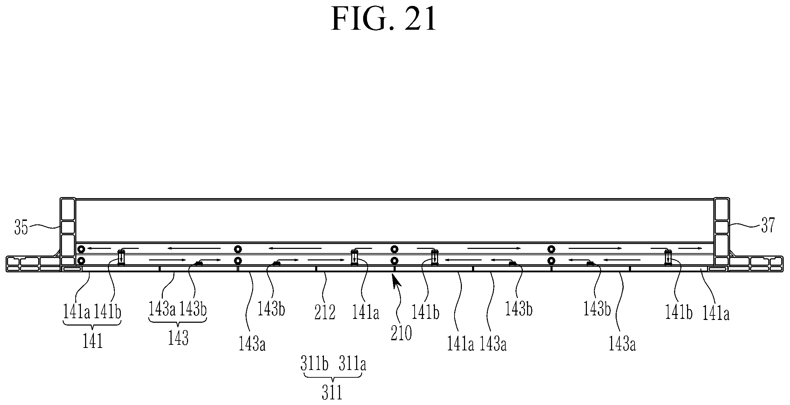

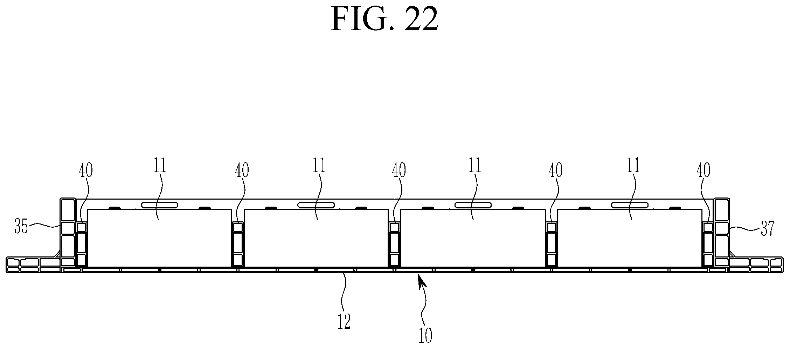

FIG. 18 is a perspective view schematically showing a battery pack according to a third embodiment of the present disclosure, FIG. 19 is an exploded perspective view schematically showing the battery pack of FIG. 18, FIG. 20 is a plan view schematically showing a base plate of FIG. 18, FIG. 21 is a cross-sectional view that is cut along a line F-F of FIG. 18 and schematically shows a state in which a composite frame and the base plate are connected by a flow path connection portion, and FIG. 22 is a cross-sectional view cut along a line E-E of FIG. 18. The same reference numeral as that in FIGS. 1 to 17 denotes the same or similar member having the same or similar function. Hereinafter, a detailed description of the same reference numerals is omitted.

As shown in FIGS. 18 to 22, the base plate 210 of the battery pack 300 according to the third embodiment of the present disclosure includes a cooling plate 212 in which the plurality of battery cells are in contact with a first surface of the base plate 212. A base flow path 220 is formed in the base plate 212. The flow path connection portion 14 is coupled to one end of the cooling plate 212 and connects the first side surface flow path 311 of the frame portion 30 and the base flow path 220. The refrigerant guiding portion 16 is coupled to the other end of the cooling plate 212 and is configured to guide a flow of the refrigerant introduced into the base flow path 220 in a discharge direction through the flow path connection portion 14.

The base flow path 220 may include an inflow flow path 221, a common inflow flow path 222, and a discharge flow path 223.

The inflow flow path 221 may be configured such that a first inflow flow path 221a, a second inflow flow path 221b, and the common inflow flow path 222 extend along a first direction (i.e., a length direction in the Y-axis direction) inside the cooling plate 212 and are spaced apart from each other in the X-axis direction.

The first inflow flow path 221a may extend along the first direction inside one edge portion of the cooling plate 212 so that the refrigerant may be introduced and the first inflow flow path 221a may be connected to the discharge flow path 223.

The second inflow flow path 221b may extend along the first direction inside an edge portion of the other side of the cooling plate 212 so that the refrigerant may be introduced and the second inflow flow path 221b may be connected to the discharge flow path 223.

The common inflow flow path 222 may include two flow paths that are formed along the first direction (the Y-axis direction) inside the cooling plate 212 between the first inflow flow path 221a and the second inflow flow path 221b and move the refrigerant. The common inflow flow path 222 may be connected to the discharge flow path 223.

The common inflow flow path 222 may include a first common inflow flow path 222a extending along the first direction inside the cooling plate 212 between the first inflow flow path 221a and the second inflow flow path 221b and is connected to a first common discharge flow path 223a to be described later. The common inflow flow path 222 may also include a second common inflow flow path 222b extending along the first direction inside the cooling plate 212 parallel or substantially parallel to the first common inflow flow path 222a and is connected to a second common discharge flow path 223b to be described later.

In one or more embodiments, a portion of the refrigerant introduced through the common inflow flow path 222 may flow through the first common inflow flow path 222a to circulate to the first common discharge flow path 223a.

A portion of the remaining refrigerant introduced through the common inflow flow path 222 may flow through the second common inflow flow path 222b to circulate through the second common discharge flow path 223b.

The discharge flow path 223 may be connected to the inflow flow path between the first inflow flow path 221a, the second inflow flow path 221b, and the common inflow flow path 222 to circulate the refrigerant.

The discharge flow path 223 may include the first common discharge flow path 223a inside the cooling plate 212 between the first inflow flow path 221a and the common inflow flow path 222, and the second common discharge flow path 223b inside the cooling plate 212 between the common inflow flow path 222 and the second inflow flow path 221b.

The first common discharge flow path 223a may be inside the cooling plate 212 extending in the first direction and may be connected to each of the first inflow flow path 221a and the common inflow flow path 222 such that the refrigerant moving through each of the first inflow flow path 221a and the common inflow flow path 222 is circulated and discharged.

In one or more embodiments, the first common discharge flow path 223a may include a first output flow path 223a1 inside the cooling plate 212 between the first inflow flow path 221a and the common inflow flow path 222 and connected to the first inflow flow path 221a to discharge the refrigerant, and a second output flow path 223a2 inside the cooling plate 212 on a side surface of the first output flow path 223a1 and connected to the first common inflow flow path 222a to discharge the refrigerant.

In one or more embodiments, the refrigerant introduced through the first inflow flow path 221a may be discharged through the first output flow path 223a1. The refrigerant introduced through the first common inflow flow path 222a may be discharged through the second output flow path 223a2.

The second common discharge flow path 223b may extend inside the cooling plate 212 between the common inflow flow path 222 and the second inflow flow path 221b along the first direction (the Y-axis direction) and may be connected to each of the common inflow flow path 222 and the second inflow flow path 221b such that the refrigerant flowing through each of the common inflow flow path 222 and the second inflow flow path 221b is circulated and discharged.

The second common discharge flow path 223b may include a third output flow path 223b1 inside the cooling plate 212 between the second inflow flow path 221b and the common inflow flow path 222 and connected to the second common inflow flow path 222b to discharge the refrigerant, and a fourth output flow path 223b2 inside the cooling plate 212 on a side surface of the third output flow path 223b1 and connected to the second inflow flow path 221b to discharge the refrigerant.

In one or more embodiments, the refrigerant introduced through the second common inflow flow path 222b may be discharged through the third output flow path 223b1. The refrigerant introduced through the second inflow flow path 221b may be discharged through the fourth output flow path 223b2.

In one or more embodiments, the flow path connection portion 14 may include the first connection portion 141 coupled to one end of the cooling plate 212 to connect the first inflow flow path 221a, the second inflow flow path 221b, and the common inflow flow path 222 to the side surface flow path of the frame portion 30, and the second connection portion 143 coupled to one end of the cooling plate 212 to connect the first common discharge flow path 223a and the second common discharge flow path 223b to the side surface flow path of the frame portion 30.

The first coupling groove 12a for coupling of the first connection portion 141 may be at one side of each of the first and second inflow flow paths 221a and 221b, the common inflow flow path 222, and the first and second common discharge flow paths 223a and 223b.

The first connection portion 141 may include the first bending plate 141a covering the first coupling groove 12a at the first and second inflow flow paths 221a and 221b and the common inflow flow path 222 and the other side is bent downward in a thickness direction (Z-axis direction) of the cooling plate 112. The first pipe line 141b protrudes upward from the first bending plate 141a and extends into the inside of the composite frame 31 and connects the first and second inflow flow paths 221a and 221b and the common inflow flow path 222 to the first side surface flow path 311 of the composite frame 31.

The first bending plates 141a may be coupled to each of the first and second inflow flow paths 221a and 221b and the common inflow flow path 222, and the first pipe line 141b may be coupled to an upper portion of the first bending plate 141a.

The first pipe line 141b is configured to enable a circulating supply of the refrigerant by connecting the first and second inflow flow paths 221a and 221b and the common inflow flow path 222 to the first side surface flow path 311 of the composite frame 31.

The second connection portion 143 may include the second bending plate 143a having one side covering the first coupling groove 12a and the other side bent downward to extend in a thickness direction (the Z-axis direction) of the cooling plate. The second pipe line 143b protrudes upward from the second bending plate 143a and extends into the inside of the composite frame 31 to connect the first and second common discharge flow paths 223a and 223b to the side surface flow path.

The second bending plates 143a may be coupled to the first coupling groove 12a at each of the first and second common discharge flow paths 223a and 223b, and the second pipe line 143b may extend upward from an upper portion of the second bending plate 143a.

The second coupling groove 12b for coupling the refrigerant guiding portion 16 may be at the other side of each of each of the first and second inflow flow paths 221a and 221b, the common inflow flow path 222, and the first and second common discharge flow paths 223a and 223b.

As described above, the battery pack 300 of the third embodiment of the present disclosure may effectively cool three surfaces of a lower portion and a side surface of the battery cell 11 in a configuration in which the plurality of battery cells 11 including the battery cell are accommodated inside the frame portion. Cooling the battery cells 11 is configured to extend usage lifespan of the battery pack and improve durability of the battery pack.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

10, 110: base plate 1: battery cell
12, 112: cooling plate 12a: first coupling groove
12b: second coupling groove 14, 114: flow path connection portion
141: first connection portion 141a: first bending plate
141b: first pipe line 141c: first sealing member
143: second connection portion 143a: second bending plate
143b: second pipe line 143c: second sealing member
16: refrigerant guiding portion 20, 120, 220: base flow path
21, 121, 221: inflow flow path 121a: first inflow flow path
121b: second inflow flow path 222: common inflow flow path
222a: first common inflow flow path
222b: second common inflow flow path
23, 123, 223: discharge flow path 223a: first common discharge flow path
223a1: first output flow path 223a2: second output flow path
223b: second common discharge flow path 223b1: third output flow path
223b2: fourth output flow path 123a: first discharge flow path
123b: second discharge flow path 30: frame portion
31: composite frame 33: end frame
35: first side frame 37: second side frame
311: first side surface flow path 311a: upper flow path
311b: lower flow path 312: gas inflow portion
314: gas venting portion 315: venting unit
315a: venting body 315b: venting protruding portion
316: guiding portion 40: side surface cooling frame
41: second side surface flow path 41a: side surface upper flow path
41b: side surface lower flow path 43: first plug
45: second plug 47: side surface refrigerant guiding portion

## Claims

1. A battery pack (100, 200, 300) comprising:
a plurality of battery cells (11);
a base plate (10, 110, 210) comprising a first surface and a base flow path (20, 120, 220), wherein the plurality of battery cells (11) is in contact with the first surface and the base flow path (20, 120, 220) is configured to circulate a refrigerant to cool the plurality of battery cells (11); and
a frame portion (30) comprising a plurality of frames coupled to each other at an upper side of the first surface of the base plate (10, 110, 210), the frame portion (30) forming an accommodation space for accommodating the plurality of battery cells (11) and a side surface flow path (311, 41) connected to the base flow path (20, 120, 220) through which the refrigerant is configured to flow,
wherein the base plate (10, 110, 210) comprises:
a cooling plate (12, 112, 212) comprising the first surface and the base flow path (20, 120, 220);
a flow path connection portion (14) coupled to one end of the cooling plate (12, 112, 212) and connecting the side surface flow path (311, 41) of the frame portion (30) and the base flow path (20, 120, 220); and
a refrigerant guiding portion (16) coupled to another end of the cooling plate (12, 112, 212), the refrigerant guiding portion (16) being configured to guide a flow of the refrigerant introduced into the base flow path (20, 120, 220) in a discharge direction through the flow path connection portion (14),
wherein
the base flow path (20, 120, 220) comprises an inflow flow path (21, 121, 221) through which the refrigerant introduced through the flow path connection portion (14) moves in a first direction inside the cooling plate (12, 112, 212) and a discharge flow path (23, 123, 223) in which a flow direction of the refrigerant introduced through the inflow flow path (21, 121, 221) is reversed at a position of the refrigerant guiding portion (16) to move in a second direction opposite to the first direction,
the inflow flow path (21, 121, 221) extends along the first direction inside one side of the cooling plate (12, 112, 212) to introduce the refrigerant and is connected to the discharge flow path (23, 123, 223) at the position of the refrigerant guiding portion (16), and
the discharge flow path (23, 123, 223) is connected to the inflow flow path (21, 121, 221) inside the cooling plate (12, 112, 212),
the battery pack (100, 200, 300) further comprising a first coupling groove (12a) at the one end of the cooling plate (12, 112, 212) coupled to the flow path connection portion (14), the first coupling groove (12a) opening a portion of each of the inflow flow path (21, 121, 221) and the discharge flow path (23, 123, 223),
wherein the flow path connection portion (14) comprises:
a first connection portion (141) coupled to the one end of the cooling plate (12, 112, 212) to connect the inflow flow path (21, 121, 221) to the side surface flow path (311, 41) of the frame portion (30); and
a second connection portion (143) coupled to the one end of the cooling plate (12, 112, 212) to connect the discharge flow path (23, 123, 223) to the side surface flow path (311, 41) of the frame portion (30),
wherein
the first connection portion (141) comprises a first bending plate (141a) including one side covering the first coupling groove (12a) and another side extending in a thickness direction of the cooling plate (12, 112, 212), and a first pipe line (141b) protruding from an upper side of the first bending plate (141a) and extending into the frame portion (30) and connecting the inflow flow path (21, 121, 221) and the side surface flow path (311, 41), and
the second connection portion (143) comprises a second bending plate (143a) including one side covering the first coupling groove (12a) and another side extending in the thickness direction of the cooling plate (12, 112, 212), and a second pipe line (143b) protruding from an upper side of the second bending plate (143a) and extending into the frame portion (30) and connecting the inflow flow path (21, 121, 221) and the side surface flow path (311, 41).

2. The battery pack (100, 200, 300) as claimed in claim 1, further comprising a second coupling groove (12b) at another end of the cooling plate (12, 112, 212), the second coupling groove (12b) being coupled to the refrigerant guiding portion (16) and opening a portion of each of the inflow flow path (21, 121, 221) and the discharge flow path (23, 123, 223).

3. The battery pack (100, 200, 300) as claimed in claim 2, wherein the refrigerant guiding portion (16) comprises a third bending plate including one side covering the second coupling groove (12b) and another side extending in a thickness direction of the cooling plate (12, 112, 212).

4. A battery pack (100, 200, 300) comprising:
a plurality of battery cells (11);
a base plate (10, 110, 210) comprising a first surface and a base flow path (20, 120, 220), wherein the plurality of battery cells (11) is in contact with the first surface and the base flow path (20, 120, 220) is configured to circulate a refrigerant to cool the plurality of battery cells (11); and
a frame portion (30) comprising a plurality of frames coupled to each other at an upper side of the first surface of the base plate (10, 110, 210), the frame portion (30) forming an accommodation space for accommodating the plurality of battery cells (11) and a side surface flow path (311, 41) connected to the base flow path (20, 120, 220) through which the refrigerant is configured to flow,
wherein the base plate (10, 110, 210) comprises:
a cooling plate (12, 112, 212) comprising the first surface and the base flow path (20, 120, 220);
a flow path connection portion (14) coupled to one end of the cooling plate (12, 112, 212) and connecting the side surface flow path (311, 41) of the frame portion (30) and the base flow path (20, 120, 220); and
a refrigerant guiding portion (16) coupled to another end of the cooling plate (12, 112, 212), the refrigerant guiding portion (16) being configured to guide a flow of the refrigerant introduced into the base flow path (20, 120, 220) in a discharge direction through the flow path connection portion (14),
wherein
the base flow path (20, 120, 220) comprises an inflow flow path (21, 121, 221) through which the refrigerant introduced through the flow path connection portion (14) moves in a first direction inside the cooling plate (12, 112, 212) and a discharge flow path (23, 123, 223) in which a flow direction of the refrigerant introduced through the inflow flow path (21, 121, 221) is reversed at a position of the refrigerant guiding portion (16) to move in a second direction opposite to the first direction,
the inflow flow path (21, 121, 221) extends along the first direction inside one side of the cooling plate (12, 112, 212) to introduce the refrigerant and is connected to the discharge flow path (23, 123, 223) at the position of the refrigerant guiding portion (16), and
the discharge flow path (23, 123, 223) is connected to the inflow flow path (21, 121, 221) inside the cooling plate (12, 112, 212),
the battery pack (100, 200, 300) further comprising a first coupling groove (12a) at the one end of the cooling plate (12, 112, 212) coupled to the flow path connection portion (14), the first coupling groove (12a) opening a portion of each of the inflow flow path (21, 121, 221) and the discharge flow path (23, 123, 223),
the battery pack (100, 200, 300) further comprising a second coupling groove (12b) at another end of the cooling plate (12, 112, 212), the second coupling groove (12b) being coupled to the refrigerant guiding portion (16) and opening a portion of each of the inflow flow path (21, 121, 221) and the discharge flow path (23, 123, 223),
wherein the refrigerant guiding portion (16) comprises a third bending plate including one side covering the second coupling groove (12b) and another side extending in a thickness direction of the cooling plate (12, 112, 212).

5. The battery pack (100, 200, 300) as claimed in claim 4, wherein the flow path connection portion (14) comprises:
a first connection portion (141) coupled to the one end of the cooling plate (12, 112, 212) to connect the inflow flow path (21, 121, 221) to the side surface flow path (311, 41) of the frame portion (30); and
a second connection portion (143) coupled to the one end of the cooling plate (12, 112, 212) to connect the discharge flow path (23, 123, 223) to the side surface flow path (311, 41) of the frame portion (30).

6. The battery pack (100, 200, 300) as claimed in any preceding claim, wherein the frame portion (30) comprises:
a composite frame (31) coupled to one edge of the base plate (10, 110, 210), wherein a first side surface flow path (311) is inside the composite frame (31) and the first side surface flow path (311) is connected to the first connection portion (141) and the second connection portion (143) to supply the refrigerant;
an end frame (33) coupled to another edge of the base plate (10, 110, 210);
a first side frame (35) having each end connected to one end of each of the composite frame (31) and the end frame (33); and
a second side frame (37) having each end connected to another end of each of the composite frame (31) and the end frame (33).

7. The battery pack (100, 200, 300) as claimed in claim 6, further comprising a gas discharge portion (313) in the composite frame (31) configured to discharge a gas generated from one of the plurality of battery cells (11), wherein the gas discharge portion (313) comprises a gas inflow portion (312) on a first side surface of the composite frame (31) and through which the gas generated from the one of the plurality of battery cells (11) is introduced and a gas venting portion (314) at the composite frame (31) through which the gas introduced into the gas inflow portion (312) is discharged to the outside.

8. The battery pack (100, 200, 300) as claimed in claim 7, wherein an inside of the composite frame (31) is divided into a first region (a) and a second region (b), wherein the first side surface flow path (311) is at the first region (a), and wherein the gas venting portion (314) is at the second region (b), and optionally
the gas venting portion (314) comprises:
a venting unit (315) protruding from a second side surface facing the first side surface of the composite frame (31), the venting unit (315) being configured to discharge the gas; and
a guiding portion (316) protruding from an inner wall surface of the second region (b) inside the composite frame (31), the guiding portion (316) being configured to guide the gas toward the venting unit (315).

9. The battery pack (100, 200, 300) as claimed in claim 6, 7 or 8, wherein the frame portion (30) further comprises a side surface cooling frame (40) in contact with side surfaces of the plurality of battery cells (11).

10. The battery pack (100, 200, 300) as claimed in claim 9, wherein one side of the side surface cooling frame (40) is connected to the first side surface flow path (311) of the composite frame (31), wherein another side of the side surface cooling frame (40) extends in a direction toward the end frame (33), and wherein a second side surface flow path (41) through which the refrigerant flows is inside the side surface cooling frame (40), and optionally
the first side surface flow path (311) comprises an upper flow path (311a) connected to the first pipe line (141b) and a lower flow path (311b) connected to the second pipe line (143b), and wherein the second side surface flow path (41) comprises a side surface upper flow path (41a) extending in a length direction inside the side surface cooling frame (40) and connected to the upper flow path (311a) of the composite frame (31) and a side surface lower flow path (41b) extending in the length direction inside the side surface cooling frame (40) and at a lower portion of the side surface upper flow path (41a) to be connected to the lower flow path (311b) of the composite frame (31), and optionally
the battery pack (100, 200, 300) further comprises a side surface refrigerant guiding portion (47) at another side of the side surface cooling frame (40), wherein the side surface refrigerant guiding portion (47) is configured to change a flow direction of the refrigerant flowing through the side surface upper flow path (41a) to a direction of the side surface lower flow path (41b).

11. The battery pack (200, 300) as claimed in claim 1 or 4, wherein the inflow flow path (121, 221) comprises a first inflow flow path (121a, 221a) extending along the first direction at one side of the cooling plate (112, 212) to introduce the refrigerant and connected to the discharge flow path (123, 223) and a second inflow flow path (121b, 221b) extending along the first direction at another side of the cooling plate (112, 212) to introduce the refrigerant and connected to the discharge flow path (123, 223), and wherein the discharge flow path (123, 223) comprises a first discharge flow path (123a, 223a) extending along the first direction between the first inflow flow path (121a, 221a) and the second inflow flow path (121b, 221b) inside the cooling plate (112, 212) and connected to the first inflow flow path (121a, 221a) to discharge the refrigerant and a second discharge flow path (123b, 223b) extending along the first direction between the first inflow flow path (121a, 221a) and the second inflow flow path (121b, 221b) inside the cooling plate (112, 212) and connected to the second inflow flow path (121b, 221b) to discharge the refrigerant, and optionally
the flow path connection portion (14) comprises:
a first connection portion (141) coupled to the one end of the cooling plate (112, 212) to connect the first inflow flow path (121a, 221a) and the second inflow flow path (121b, 221b) to the side surface flow path (311, 41) of the frame portion (30); and
a second connection portion (143) coupled to the one end of the cooling plate (112, 212) to connect the first discharge flow path (123a, 223a) and the second discharge flow path (123b, 223b) to the side surface flow path (311, 41) of the frame portion (30).

12. The battery pack (300) as claimed in claim 1 or 4, wherein the inflow flow path (221) comprises a first inflow flow path (221a) extending along the first direction inside one edge portion of the cooling plate (212) so that the refrigerant is introduced and connected to the discharge flow path (223), a second inflow flow path (221b) extending along the first direction inside an edge portion of another side of the cooling plate (212) so that the refrigerant is introduced and connected to the discharge flow path (223), and a common inflow flow path (222) comprising two flow paths extending along the first direction inside the cooling plate (212) between the first inflow flow path (221a) and the second inflow flow path (221b) and connected to the discharge flow path (223), and
wherein the discharge flow path (223) comprises a first common discharge flow path (223a) extending along the first direction inside the cooling plate (212) between the first inflow flow path (221a) and the common inflow flow path (222) and connected to each of the first inflow flow path (221a) and the common inflow flow path (222) to discharge the refrigerant and a second common discharge flow path (223b) extending along the first direction inside the cooling plate (212) between the second inflow flow path (221b) and the common inflow flow path (222) and connected to each of the second inflow flow path (221b) and the common inflow flow path (222) to discharge the refrigerant, and optionally
the flow path connection portion (14) comprises:
a first connection portion (141) coupled to the one end of the cooling plate (212) to connect the first inflow flow path (221a), the second inflow flow path (221b), and the common inflow flow path (222) to the side surface flow path (311, 41) of the frame portion (30); and
a second connection portion (143) coupled to the one end of the cooling plate (212) to connect the first common discharge flow path (223a) and the second common discharge flow path (223b) to the side surface flow path (311, 41) of the frame portion (30).

## Patentansprüche

1. Batteriepack (100, 200, 300), umfassend:
eine Vielzahl von Batteriezellen (11);
eine Grundplatte (10, 110, 210), die eine erste Oberfläche und einen Basisströmungspfad (20, 120, 220) umfasst, wobei die Vielzahl von Batteriezellen (11) mit der ersten Oberfläche in Kontakt steht, und der Basisströmungspfad (20, 120, 220) dazu konfiguriert ist, ein Kältemittel zum Kühlen der Vielzahl von Batteriezellen (11) umzuwälzen; und
einen Rahmenabschnitt (30), der eine Vielzahl von Rahmen umfasst, die an einer Oberseite der ersten Oberfläche der Grundplatte (10, 110, 210) miteinander gekoppelt sind, wobei der Rahmenabschnitt (30) einen Aufnahmeraum zum Aufnehmen der Vielzahl von Batteriezellen (11) bildet, und einen Seitenflächenströmungspfad (311, 41), der mit dem Basisströmungspfad (20, 120, 220), durch den das Kältemittel strömen soll, verbunden ist,
wobei die Grundplatte (10, 110, 210) Folgendes umfasst:
eine Kühlplatte (12, 112, 212), die die erste Oberfläche und den Basisströmungspfad (20, 120, 220) umfasst;
einen Strömungspfadverbindungsabschnitt (14), der mit einem Ende der Kühlplatte (12, 112, 212) gekoppelt ist und den Seitenflächenströmungspfad (311, 41) des Rahmenabschnitts (30) mit dem Basisströmungspfad (20, 120, 220) verbindet; und
einen Kältemittelführungsabschnitt (16), der mit einem anderen Ende der Kühlplatte (12, 112, 212) gekoppelt ist, wobei der Kältemittelführungsabschnitt (16) dazu konfiguriert ist, einen in den Basisströmungspfad (20, 120, 220) eingeführten Kältemittelstrom in einer Entleerungsrichtung durch den Strömungspfadverbindungsabschnitt (14) zu führen,
wobei
der Basisströmungspfad (20, 120, 220) einen Einlaufströmungspfad (21, 121, 221) umfasst, durch den sich das durch den Strömungspfadverbindungsabschnitt (14) eingeführte Kältemittel in einer ersten Richtung innerhalb der Kühlplatte (12, 112, 212) bewegt, und einen Auslaufströmungspfad (23, 123, 223), in dem eine Strömungsrichtung des über den Einlaufströmungspfad (21, 121, 221) eingeführten Kältemittels an einer Position des Kältemittelführungsabschnitts (16) umgekehrt wird, um sich in einer zweiten, der ersten Richtung entgegengesetzten Richtung zu bewegen,
sich der Einlaufströmungspfad (21, 121, 221) in der ersten Richtung innerhalb einer Seite der Kühlplatte (12, 112, 212) erstreckt, um das Kältemittel einzuführen, und an der Position des Kältemittelführungsabschnitts (16) mit dem Auslaufströmungspfad (23, 123, 223) verbunden ist, und
der Auslaufströmungspfad (23, 123, 223) mit dem Einlaufströmungspfad (21, 121, 221) innerhalb der Kühlplatte (12, 112, 212) verbunden ist,
das Batteriepack (100, 200, 300) weiter eine erste Kopplungsnut (12a) an dem einen Ende der Kühlplatte (12, 112, 212), die mit dem Strömungspfadverbindungsabschnitt (14) verbunden ist, umfasst, wobei die erste Kopplungsnut (12a) jeweils einen Abschnitt des Einlaufströmungspfads (21, 121, 221) bzw. des Auslaufströmungspfads (23, 123, 223) öffnet,
wobei der Strömungspfadverbindungsabschnitt (14) Folgendes umfasst:
einen ersten Verbindungsabschnitt (141), der mit dem einem Ende der Kühlplatte (12, 112, 212) gekoppelt ist, um den Einlaufströmungspfad (21, 121, 221) mit dem Seitenflächenströmungspfad (311, 41) des Rahmenabschnitts (30) zu verbinden; und
einen zweiten Verbindungsabschnitt (143), der mit dem einen Ende der Kühlplatte (12, 112, 212) gekoppelt ist, um den Auslaufströmungspfad (23, 123, 223) mit dem Seitenflächenströmungspfad (311, 41) des Rahmenabschnitts (30) zu verbinden,
wobei
der erste Verbindungsabschnitt (141) eine erste Biegeplatte (141a) umfasst, die eine Seitenabdeckung, die die erste Kopplungsnut (12a) einschließt, und eine andere Seite, die sich in einer Dickenrichtung der Kühlplatte (12, 112, 212) erstreckt, abdeckt, sowie eine erste Rohrleitung (141b), die von Oberseite der ersten Biegeplatte (141a) in den Rahmenabschnitt (30) vorragt und den Einlaufströmungspfad (21, 121, 221) mit dem Seitenflächenströmungspfad (311, 41) verbindet, und
der zweite Verbindungsabschnitt (143) eine zweite Biegeplatte (143a) umfasst, die eine Seite, die die erste Kopplungsnut (12a) einschließt und eine andere Seite, die sich in der Dickenrichtung der Kühlplatte (12, 112, 212) erstreckt, abdeckt, sowie eine zweite Rohrleitung (143b), die von einer Oberseite der zweiten Biegeplatte (143a) vorragt und sich in den Rahmenabschnitt (30) erstreckt und den Einlaufströmungspfad (21, 121, 221) mit dem Seitenflächenströmungspfad (311, 41) verbindet.

2. Batteriepack (100, 200, 300) nach Anspruch 1, das weiter eine zweite Kopplungsnut (12b) an einem anderen Ende der Kühlplatte (12, 112, 212) umfasst, wobei die zweite Kopplungsnut (12b) mit dem Kältemittelführungsabschnitt (16) gekoppelt ist und jeweils einen Abschnitt des Einlaufströmungspfads (21, 121, 221) bzw. des Auslaufströmungspfads (23, 123, 223) öffnet.

3. Batteriepack (100, 200, 300) nach Anspruch 2, wobei der Kältemittelführungsabschnitt (16) eine dritte Biegeplatte umfasst, die eine Seite einschließt, die die zweite Kopplungsnut (12b) abdeckt, und eine andere Seite, die sich in einer Dickenrichtung der Kühlplatte (12, 112, 212) erstreckt.

4. Batteriepack (100, 200, 300), umfassend:
eine Vielzahl von Batteriezellen (11);
eine Grundplatte (10, 110, 210), die eine erste Oberfläche und einen Basisströmungspfad (20, 120, 220) umfasst, wobei die Vielzahl von Batteriezellen (11) mit der ersten Oberfläche in Kontakt steht, und der Basisströmungspfad (20, 120, 220) dazu konfiguriert ist, ein Kältemittel zum Kühlen der Vielzahl von Batteriezellen (11) umzuwälzen; und
einen Rahmenabschnitt (30), der eine Vielzahl von Rahmen umfasst, die an einer Oberseite der ersten Oberfläche der Grundplatte (10, 110, 210) miteinander gekoppelt sind, wobei der Rahmenabschnitt (30) einen Aufnahmeraum zum Aufnehmen der Vielzahl von Batteriezellen (11) bildet, und einen Seitenflächenströmungspfad (311, 41), der mit dem Basisströmungspfad (20, 120, 220), durch den das Kältemittel strömen soll, verbunden ist,
wobei die Grundplatte (10, 110, 210) Folgendes umfasst:
eine Kühlplatte (12, 112, 212), die die erste Oberfläche und den Basisströmungspfad (20, 120, 220) umfasst;
einen Strömungspfadverbindungsabschnitt (14), der mit einem Ende der Kühlplatte (12, 112, 212) gekoppelt ist und den Seitenflächenströmungspfad (311, 41) des Rahmenabschnitts (30) mit dem Basisströmungspfad (20, 120, 220) verbindet; und
einen Kältemittelführungsabschnitt (16), der mit einem anderen Ende der Kühlplatte (12, 112, 212) gekoppelt ist, wobei der Kältemittelführungsabschnitt (16) dazu konfiguriert ist, einen in den Basisströmungspfad (20, 120, 220) eingeführten Kältemittelstrom in einer Entleerungsrichtung durch den Strömungspfadverbindungsabschnitt (14) zu führen,
wobei
der Basisströmungspfad (20, 120, 220) einen Einlaufströmungspfad (21, 121, 221) umfasst, durch den sich das durch den Strömungspfadverbindungsabschnitt (14) eingeführte Kältemittel in einer ersten Richtung innerhalb der Kühlplatte (12, 112, 212) bewegt, und einen Auslaufströmungspfad (23, 123, 223), in dem eine Strömungsrichtung des über den Einlaufströmungspfad (21, 121, 221) eingeführten Kältemittels an einer Position des Kältemittelführungsabschnitts (16) umgekehrt wird, um sich in einer zweiten, der ersten Richtung entgegengesetzten Richtung zu bewegen,
sich der Einlaufströmungspfad (21, 121, 221) in der ersten Richtung innerhalb einer Seite der Kühlplatte (12, 112, 212) erstreckt, um das Kältemittel einzuführen, und an der Position des Kältemittelführungsabschnitts (16) mit dem Auslaufströmungspfad (23, 123, 223) verbunden ist, und
der Auslaufströmungspfad (23, 123, 223) mit dem Einlaufströmungspfad (21, 121, 221) innerhalb der Kühlplatte (12, 112, 212) verbunden ist,
das Batteriepack (100, 200, 300) weiter eine erste Kopplungsnut (12a) an dem einen Ende der Kühlplatte (12, 112, 212), die mit dem Strömungspfadverbindungsabschnitt (14) verbunden ist, umfasst, wobei die erste Kopplungsnut (12a) jeweils einen Abschnitt des Einlaufströmungspfads (21, 121, 221) bzw. des Auslaufströmungspfads (23, 123, 223) öffnet,
das Batteriepack (100, 200, 300) weiter eine zweite Kopplungsnut (12b) an einem anderen Ende der Kühlplatte (12, 112, 212) umfasst, wobei die zweite Kopplungsnut (12b) mit dem Kältemittelführungsabschnitt (16) gekoppelt ist und jeweils einen Abschnitt des Einlaufströmungspfads (21, 121, 221) bzw. des Auslaufströmungspfads (23, 123, 223) öffnet.
wobei der Kältemittelführungsabschnitt (16) eine dritte Biegeplatte umfasst, die eine Seite, die die zweite Kopplungsnut (12b) abdeckt, und eine andere Seite, die sich in Dickenrichtung der Kühlplatte (12, 112, 212) erstreckt, einschließt.

5. Batteriepack (100, 200, 300) nach Anspruch 4, wobei der Strömungspfadverbindungsabschnitt (14) Folgendes umfasst:
einen ersten Verbindungsabschnitt (141), der mit dem einem Ende der Kühlplatte (12, 112, 212) gekoppelt ist, um den Einlaufströmungspfad (21, 121, 221) mit dem Seitenflächenströmungspfad (311, 41) des Rahmenabschnitts (30) zu verbinden; und
einen zweiten Verbindungsabschnitt (143), der mit dem einen Ende der Kühlplatte (12, 112, 212) gekoppelt ist, um den Auslaufströmungspfad (23, 123, 223) mit dem Seitenflächenströmungspfad (311, 41) des Rahmenabschnitts (30) zu verbinden,

6. Batteriepack (100, 200, 300) nach einem vorstehenden Anspruch, wobei der Rahmenabschnitt (30) Folgendes umfasst:
einen Verbundrahmen (31), der mit einer Kante der Grundplatte (10, 110, 210) gekoppelt ist, wobei sich ein erster Seitenflächenströmungspfad (311) innerhalb des Verbundrahmens (31) befindet und der erste Seitenflächenströmungspfad (311) mit dem ersten Verbindungsabschnitt (141) und dem zweiten Verbindungsabschnitt (143) verbunden ist, um das Kältemittel zuzuführen;
einen Endrahmen (33), der mit einer anderen Kante der Grundplatte (10, 110, 210) gekoppelt ist;
einen ersten Seitenrahmen (35), von dem jedes Ende mit einem Ende des Verbundrahmens (31) bzw. des Endrahmens (33) verbunden ist; und
einen zweiten Seitenrahmen (37), von dem jedes Ende mit einem anderen Ende des Verbundrahmens (31) bzw. des Endrahmens (33) verbunden ist.

7. Batteriepack (100, 200, 300) nach Anspruch 6, das weiter einen Gasauslaufabschnitt (313) in dem Verbundrahmen (31), der zum Auslassen eines von einer der mehreren Batteriezellen (11) erzeugten Gases konfiguriert ist, umfasst, wobei der Gasauslaufabschnitt (313) einen Gaseinlaufabschnitt (312) auf einer ersten Seitenfläche des Verbundrahmens (31) umfasst, durch den das von der einen oder den mehreren Batteriezellen (11) erzeugte Gas eingeführt wird, sowie einen Gasauslaufabschnitt (314) an dem Verbundrahmen (31), durch den das in den Gaseinlaufabschnitt (312) eingeführte Gas nach außen ausgelassen wird.

8. Batteriepack (100, 200, 300) nach Anspruch 7, wobei ein Inneres des Verbundrahmens (31) in einen ersten Bereich (a) und einen zweiten Bereich (b) unterteilt ist, wobei sich der erste Seitenflächenströmungspfad (311) an dem ersten Bereich (a) befindet und wobei sich der Gasentlüftungsabschnitt (314) in dem zweiten Bereich (b) befindet, und optional
der Gasentlüftungsabschnitt (314) Folgendes umfasst:
eine Entlüftungseinheit (315), die von einer zweiten Seitenfläche, die der ersten Seitenfläche des Verbundrahmens (31) zugewandt ist, vorragt und dazu konfiguriert ist, das Gas auszulassen; und
einen Führungsabschnitt (316), der von einer Innenwandfläche des zweiten Bereichs (b) innerhalb des Verbundrahmens (31) vorragt, wobei der Führungsabschnitt (316) dazu konfiguriert ist, das Gas zu der Entlüftungseinheit (315) zu führen.

9. Batteriepack (100, 200, 300) nach Anspruch 6, 7 oder 8, wobei der Rahmenabschnitt (30) weiter einen Seitenflächenkühlrahmen (40) umfasst, der mit den Seitenflächen der Vielzahl von Batteriezellen (11) in Kontakt steht.

10. Batteriepack (100, 200, 300) nach Anspruch 9, wobei eine Seite des Seitenflächenkühlrahmens (40) mit dem ersten Seitenflächenströmungspfad (311) des Verbundrahmens (31) verbunden ist, wobei sich die andere Seite des Seitenflächenkühlrahmens (40) in einer Richtung des Endrahmens (33) erstreckt, und wobei sich ein zweiter Seitenflächenströmungspfad (41), durch den das Kältemittel strömt, innerhalb des Seitenflächenkühlrahmens (40) befindet, und optional
der erste Seitenflächenströmungspfad (311) einen oberen Strömungspfad (311a), der mit der ersten Rohrleitung (141b) verbunden ist, und einen unteren Strömungspfad (311b), der mit der zweiten Rohrleitung (143b) verbunden ist, umfasst, und wobei der zweite Seitenflächenströmungspfad (41) einen oberen Seitenflächenströmungspfad (41a) umfasst, der sich in einer Längsrichtung innerhalb des Seitenflächenkühlrahmens (40) erstreckt und mit dem oberen Strömungspfad (311a) des Verbundrahmens (31) verbunden ist, sowie einen unteren Strömungspfad (41b), der sich in der Längsrichtung innerhalb des Seitenflächenkühlrahmens (40) und an einem unteren Abschnitt des oberen Strömungspfads (41a) erstreckt, um mit dem unteren Strömungspfad (311b) des Verbundrahmens (31) verbunden zu sein, und optional
das Batteriepack (100, 200, 300) weiter einen Seitenflächen-Kältemittelführungsabschnitt (47) an der anderen Seite des Seitenflächenkühlrahmens (40) umfasst, wobei der Seitenflächen-Kältemittelführungsabschnitt (47) dazu konfiguriert ist, die Strömungsrichtung des durch den oberen Seitenflächenströmungspfad (41a) strömenden Kältemittels in einer Richtung des unteren Seitenflächenströmungspfads (41b) zu ändern.

11. Batteriepack (200, 300) nach Anspruch 1 oder 4, wobei der Einlaufströmungspfad (121, 221) einen ersten Einlaufströmungspfad (121a, 221a) umfasst, der sich entlang der ersten Richtung an einer Seite der Kühlplatte (112, 212) erstreckt, um das Kältemittel einzuführen, und mit dem Auslaufströmungspfad (123, 223) verbunden ist, sowie einen zweiten Einlaufströmungspfad (121b, 221b), der sich entlang der ersten Richtung an einer anderen Seite der Kühlplatte (112, 212) zum Einführen des Kältemittels erstreckt und mit dem Auslaufströmungspfad (123, 223) verbunden ist, und wobei der Auslaufströmungspfad (123, 223) einen ersten Auslaufströmungspfad (123a, 223a) umfasst, der sich entlang der ersten Richtung zwischen dem ersten Einlaufströmungspfad (121a, 221a) und dem zweiten Einlaufströmungspfad (121b, 221b) innerhalb der Kühlplatte (112, 212) erstreckt und mit dem ersten Einlaufströmungspfad (121a, 221a) verbunden ist, um das Kältemittel auszulassen, und einen zweiten Auslaufströmungspfad (123b, 223b), der sich in der ersten Richtung zwischen dem ersten Einlaufströmungspfad (121a, 221a) und dem zweiten Einlaufströmungspfad (121b, 221b) innerhalb der Kühlplatte (112, 212) erstreckt und mit dem zweiten Einlaufströmungspfad (121b, 221b) verbunden ist, um das Kältemittel auszulassen, und optional
der Strömungspfadverbindungsabschnitt (14) Folgendes umfasst:
einen ersten Verbindungsabschnitt (141), der mit dem einen Ende der Kühlplatte (112, 212) gekoppelt ist, um den ersten Einlaufströmungspfad (121a, 221a) und den zweiten Einlaufströmungspfad (121b, 221b) mit dem Seitenflächenströmungspfad (311, 41) des Rahmenabschnitts (30) zu verbinden; und
einen zweiten Verbindungsabschnitt (143), der mit dem einen Ende der Kühlplatte (112, 212) gekoppelt ist, um den ersten Auslaufströmungspfad (123a, 223a) und den zweiten Auslaufströmungspfad (123b, 223b) mit dem Seitenflächenströmungspfad (311, 41) des Rahmenabschnitts (30) zu verbinden.

12. Batteriepack (300) nach Anspruch 1 oder 4, wobei der Einlaufströmungspfad (221) einen ersten Einlaufströmungspfad (221a) umfasst, der sich in der ersten Richtung innerhalb eines Randbereichs der Kühlplatte (212) derart erstreckt, dass das Kältemittel eingeführt und mit dem Auslaufpfad (223) verbunden wird, einen zweiten Einlaufströmungspfad (221b), der sich in der ersten Richtung innerhalb eines Randbereichs der anderen Seite der Kühlplatte (212) derart erstreckt, dass das Kältemittel eingeführt und mit dem Auslaufströmungspfad (223) verbunden wird, und einen gemeinsamen Einlaufströmungspfad (222), der zwei Strömungsrate umfasst, die sich in der ersten Richtung innerhalb der Kühlplatte (212) zwischen dem ersten Einlaufströmungspfad (221a) und dem zweiten Einlaufströmungspfad (221b) erstrecken und mit dem Auslaufströmungspfad (223) verbunden sind,
wobei der Auslaufströmungspfad (223) einen ersten gemeinsamen Auslaufströmungspfad (223a) umfasst, der sich in der ersten Richtung innerhalb der Kühlplatte (212) zwischen dem ersten Einlaufströmungspfad (221a) und dem gemeinsamen Einlaufströmungspfad (222) erstreckt und jeweils mit dem ersten Einlaufströmungspfad (221a) und dem gemeinsamen Einlaufströmungspfad (222) verbunden ist, um das Kältemittel auszulassen, sowie einen zweiten gemeinsamen Auslaufströmungspfad (223b), der sich in der ersten Richtung innerhalb der Kühlplatte (212) zwischen dem zweiten Einlaufströmungspfad (221b) und dem gemeinsamen Einlaufströmungspfad (222) erstreckt und mit dem zweiten Einlaufströmungspfad (221b) bzw. dem gemeinsamen Einlaufströmungspfad (222) verbunden ist, um das Kältemittel auszulassen, und optional
der Strömungspfadverbindungsabschnitt (14) Folgendes umfasst:
einen ersten Verbindungsabschnitt (141), der mit einem Ende der Kühlplatte (212) gekoppelt ist, um den ersten Einlaufströmungspfad (221a), den zweiten Einlaufströmungspfad (221b) und den gemeinsamen Einlaufströmungspfad (222) mit dem Seitenflächenströmungspfad (311, 41) des Rahmenabschnitts (30) zu verbinden; und
einen zweiten Verbindungsabschnitt (143), der mit dem einen Ende der Kühlplatte (212) gekoppelt ist, um den ersten gemeinsamen Auslaufströmungspfad (223a) und den zweiten gemeinsamen Auslaufströmungspfad (223b) mit dem Seitenflächenströmungspfad (311, 41) des Rahmenabschnitts (30) zu verbinden.

## Revendications

1. Bloc-batterie (100, 200, 300) comprenant :
une pluralité de cellules de batterie (11) ;
une plaque de base (10, 110, 210) comprenant une première surface et un chemin d'écoulement de base (20, 120, 220), dans lequel la pluralité de cellules de batterie (11) est en contact avec la première surface, et le chemin d'écoulement de base (20, 120, 220) est configuré pour faire circuler un réfrigérant afin de refroidir la pluralité de cellules de batterie (11) ; et
une partie de cadre (30) comprenant une pluralité de cadres couplés entre eux sur une face supérieure de la première surface de la plaque de base (10, 110, 210), la partie de cadre (30) formant un espace de logement pour loger la pluralité de cellules de batterie (11) et un chemin d'écoulement de surface latérale (311, 41) relié au chemin d'écoulement de base (20, 120, 220) à travers lequel le réfrigérant est configuré pour s'écouler,
dans lequel la plaque de base (10, 110, 210) comprend :
une plaque de refroidissement (12, 112, 212) comprenant la première surface et le chemin d'écoulement de base (20, 120, 220) ;
une partie de liaison de chemin d'écoulement (14) couplée à une extrémité de la plaque de refroidissement (12, 112, 212) et reliant le chemin d'écoulement de surface latérale (311, 41) de la partie de cadre (30) et le chemin d'écoulement de base (20, 120, 220) ; et
une partie de guidage de réfrigérant (16) couplée à une autre extrémité de la plaque de refroidissement (12, 112, 212), la partie de guidage de réfrigérant (16) étant configurée pour guider un flux de réfrigérant introduit dans le chemin d'écoulement de base (20, 120, 220) dans une direction de refoulement à travers la partie de liaison de chemin d'écoulement (14),
dans lequel
le chemin d'écoulement de base (20, 120, 220) comprend un chemin d'écoulement d'entrée (21, 121, 221) à travers lequel le réfrigérant introduit à travers la partie de liaison de chemin d'écoulement (14) se déplace dans une première direction à l'intérieur de la plaque de refroidissement (12, 112, 212) et un chemin d'écoulement de refoulement (23, 123, 223) dans lequel une direction d'écoulement du réfrigérant introduit à travers le chemin d'écoulement d'entrée (21, 121, 221) est inversée à une position de la partie de guidage de réfrigérant (16) pour se déplacer dans une seconde direction opposée à la première direction.
le chemin d'écoulement d'entrée (21, 121, 221) s'étend dans la première direction à l'intérieur d'un côté de la plaque de refroidissement (12, 112, 212) pour introduire le réfrigérant et est relié au chemin d'écoulement de refoulement (23, 123, 223) à la position de la partie de guidage de réfrigérant (16), et
le chemin d'écoulement de refoulement (23, 123, 223) est relié au chemin d'écoulement d'entrée (21, 121, 221) à l'intérieur de la plaque de refroidissement (12, 112, 212),
le bloc-batterie (100, 200, 300) comprenant en outre une première rainure de couplage (12a) à l'extrémité de la plaque de refroidissement (12, 112, 212) couplée à la partie de liaison de chemin d'écoulement (14), la première rainure de couplage (12a) ouvrant une partie de chacun du chemin d'écoulement d'entrée (21, 121, 221) et du chemin d'écoulement de refoulement (23, 123, 223),
dans lequel la partie de liaison de chemin d'écoulement (14) comprend :
une première partie de liaison (141) couplée à l'extrémité de la plaque de refroidissement (12, 112, 212) pour relier le chemin d'écoulement d'entrée (21, 121, 221) au chemin d'écoulement de surface latérale (311, 41) de la partie de cadre (30) ; et
une seconde partie de liaison (143) couplée à l'extrémité de la plaque de refroidissement (12, 112, 212) pour relier le chemin d'écoulement de refoulement (23, 123, 223) au chemin d'écoulement de surface latérale (311, 41) de la partie de cadre (30),
dans lequel
la première partie de liaison (141) comprend une première plaque de pliage (141a) incluant un côté recouvrant la première rainure de couplage (12a) et l'autre côté s'étendant dans une direction d'épaisseur de la plaque de refroidissement (12, 112, 212), et une première conduite (141b) faisant saillie d'un côté supérieur de la première plaque de pliage (141a) et s'étendant dans la partie de cadre (30) et reliant le chemin d'écoulement d'entrée (21, 121, 221) et le chemin d'écoulement de surface latérale (311, 41), et
la seconde partie de liaison (143) comprend une deuxième plaque de pliage (143a) incluant un côté recouvrant la première rainure de couplage (12a) et l'autre côté s'étendant dans la direction d'épaisseur de la plaque de refroidissement (12, 112, 212), et une seconde conduite (143b) faisant saillie d'un côté supérieur de la deuxième plaque de pliage (143a) et s'étendant dans la partie de cadre (30) et reliant le chemin d'écoulement d'entrée (21, 121, 221) et le chemin d'écoulement de surface latérale (311, 41).

2. Bloc-batterie (100, 200, 300) selon la revendication 1, comprenant en outre une seconde rainure de couplage (12b) à une autre extrémité de la plaque de refroidissement (12, 112, 212), la seconde rainure de couplage (12b) étant couplée à la partie de guidage de réfrigérant (16) et ouvrant une partie de chacun du chemin d'écoulement d'entrée (21, 121, 221) et du chemin d'écoulement de refoulement (23, 123, 223).

3. Bloc-batterie (100, 200, 300) selon la revendication 2, dans lequel la partie de guidage de réfrigérant (16) comprend une troisième plaque de pliage incluant un côté recouvrant la seconde rainure de couplage (12b) et l'autre côté s'étendant dans une direction d'épaisseur de la plaque de refroidissement (12, 112, 212).

4. Bloc-batterie (100, 200, 300) comprenant :
une pluralité de cellules de batterie (11) ;
une plaque de base (10, 110, 210) comprenant une première surface et un chemin d'écoulement de base (20, 120, 220), dans lequel la pluralité de cellules de batterie (11) est en contact avec la première surface, et le chemin d'écoulement de base (20, 120, 220) est configuré pour faire circuler un réfrigérant afin de refroidir la pluralité de cellules de batterie (11) ; et
une partie de cadre (30) comprenant une pluralité de cadres couplés entre eux sur une face supérieure de la première surface de la plaque de base (10, 110, 210), la partie de cadre (30) formant un espace de logement pour loger la pluralité de cellules de batterie (11) et un chemin d'écoulement de surface latérale (311, 41) relié au chemin d'écoulement de base (20, 120, 220) à travers lequel le réfrigérant est configuré pour s'écouler,
dans lequel la plaque de base (10, 110, 210) comprend :
une plaque de refroidissement (12, 112, 212) comprenant la première surface et le chemin d'écoulement de base (20, 120, 220) ;
une partie de liaison de chemin d'écoulement (14) couplée à une extrémité de la plaque de refroidissement (12, 112, 212) et reliant le chemin d'écoulement de surface latérale (311, 41) de la partie de cadre (30) et le chemin d'écoulement de base (20, 120, 220) ; et
une partie de guidage de réfrigérant (16) couplée à une autre extrémité de la plaque de refroidissement (12, 112, 212), la partie de guidage de réfrigérant (16) étant configurée pour guider un flux de réfrigérant introduit dans le chemin d'écoulement de base (20, 120, 220) dans une direction de refoulement à travers la partie de liaison de chemin d'écoulement (14),
dans lequel
le chemin d'écoulement de base (20, 120, 220) comprend un chemin d'écoulement d'entrée (21, 121, 221) à travers lequel le réfrigérant introduit à travers la partie de liaison de chemin d'écoulement (14) se déplace dans une première direction à l'intérieur de la plaque de refroidissement (12, 112, 212) et un chemin d'écoulement de refoulement (23, 123, 223) dans lequel une direction d'écoulement du réfrigérant introduit à travers le chemin d'écoulement d'entrée (21, 121, 221) est inversée à une position de la partie de guidage de réfrigérant (16) pour se déplacer dans une seconde direction opposée à la première direction.
le chemin d'écoulement d'entrée (21, 121, 221) s'étend dans la première direction à l'intérieur d'un côté de la plaque de refroidissement (12, 112, 212) pour introduire le réfrigérant et est relié au chemin d'écoulement de refoulement (23, 123, 223) à la position de la partie de guidage de réfrigérant (16), et
le chemin d'écoulement de refoulement (23, 123, 223) est relié au chemin d'écoulement d'entrée (21, 121, 221) à l'intérieur de la plaque de refroidissement (12, 112, 212),
le bloc-batterie (100, 200, 300) comprenant en outre une première rainure de couplage (12a) à l'extrémité de la plaque de refroidissement (12, 112, 212) couplée à la partie de liaison de chemin d'écoulement (14), la première rainure de couplage (12a) ouvrant une partie de chacun du chemin d'écoulement d'entrée (21, 121, 221) et du chemin d'écoulement de refoulement (23, 123, 223),
le bloc-batterie (100, 200, 300) comprenant en outre une seconde rainure de couplage (12b) à une autre extrémité de la plaque de refroidissement (12, 112, 212), la seconde rainure de couplage (12b) étant couplée à la partie de guidage de réfrigérant (16) et ouvrant une partie de chacun du chemin d'écoulement d'entrée (21, 121, 221) et du chemin d'écoulement de refoulement (23, 123, 223),
dans lequel la partie de guidage de réfrigérant (16) comprend une troisième plaque de pliage incluant un côté recouvrant la seconde rainure de couplage (12b) et l'autre côté s'étendant dans une direction d'épaisseur de la plaque de refroidissement (12, 112, 212).

5. Bloc-batterie (100, 200, 300) selon la revendication 4, dans lequel la partie de liaison de chemin d'écoulement (14) comprend :
une première partie de liaison (141) couplée à l'extrémité de la plaque de refroidissement (12, 112, 212) pour relier le chemin d'écoulement d'entrée (21, 121, 221) au chemin d'écoulement de surface latérale (311, 41) de la partie de cadre (30) ; et
une seconde partie de liaison (143) couplée à l'extrémité de la plaque de refroidissement (12, 112, 212) pour relier le chemin d'écoulement de refoulement (23, 123, 223) au chemin d'écoulement de surface latérale (311, 41) de la partie de cadre (30).

6. Bloc-batterie (100, 200, 300) selon une quelconque revendication précédente, dans lequel la partie de cadre (30) comprend :
un cadre composite (31) couplé à un bord de la plaque de base (10, 110, 210), dans lequel un premier chemin d'écoulement de surface latérale (311) est à l'intérieur du cadre composite (31), et le premier chemin d'écoulement de surface latérale (311) est relié à la première partie de liaison (141) et à la seconde partie de liaison (143) pour fournir le réfrigérant ;
un cadre d'extrémité (33) couplé à un autre bord de la plaque de base (10, 110, 210) ;
un premier cadre latéral (35) présentant chaque extrémité reliée à une extrémité de chacun du cadre composite (31) et du cadre d'extrémité (33) ; et
un second cadre latéral (37) présentant chaque extrémité reliée à une autre extrémité de chacun du cadre composite (31) et du cadre d'extrémité (33).

7. Bloc-batterie (100, 200, 300) selon la revendication 6, comprenant en outre une partie de refoulement de gaz (313) dans le cadre composite (31) configurée pour refouler un gaz généré par l'une de la pluralité de cellules de batterie (11), dans lequel la partie de refoulement de gaz (313) comprend une partie d'entrée de gaz (312) sur une première surface latérale du cadre composite (31) et par laquelle le gaz généré par l'une de la pluralité de cellules de batterie (11) est introduit, et une partie d'évacuation de gaz (314) au niveau du cadre composite (31) par laquelle le gaz introduit dans la partie d'entrée de gaz (312) est refoulé vers l'extérieur.

8. Bloc-batterie (100, 200, 300) selon la revendication 7, dans lequel un intérieur du cadre composite (31) est divisé en une première région (a) et une seconde région (b), dans lequel le premier chemin d'écoulement de surface latérale (311) est au niveau de la première région (a) et dans lequel la partie d'évacuation de gaz (314) est au niveau de la seconde région (b), et éventuellement
la partie d'évacuation de gaz (314) comprend :
un dispositif d'évacuation (315) faisant saillie d'une seconde surface latérale faisant face à la première surface latérale du cadre composite (31), le dispositif d'évacuation (315) étant configuré pour refouler le gaz ; et
une partie de guidage (316) faisant saillie d'une surface de paroi intérieure de la seconde région (b) à l'intérieur du cadre composite (31), la partie de guidage (316) étant configurée pour guider le gaz vers l'unité d'évacuation (315).

9. Bloc-batterie (100, 200, 300) selon la revendication 6, 7 ou 8, dans lequel la partie de cadre (30) comprend en outre un cadre de refroidissement de surface latérale (40) en contact avec des surfaces latérales de la pluralité de cellules de batterie (11).

10. Bloc-batterie (100, 200, 300) selon la revendication 9, dans lequel un côté du cadre de refroidissement de surface latérale (40) est relié au premier chemin d'écoulement de surface latérale (311) du cadre composite (31), dans lequel un autre côté du cadre de refroidissement de surface latérale (40) s'étend dans une direction vers le cadre d'extrémité (33), et dans lequel un second chemin d'écoulement de surface latérale (41) à travers lequel circule le réfrigérant est situé à l'intérieur du cadre de refroidissement de surface latérale (40), et éventuellement
le premier chemin d'écoulement de surface latérale (311) comprend un chemin d'écoulement supérieur (311a) relié à la première conduite (141b) et un chemin d'écoulement inférieur (311b) relié à la seconde conduite (143b), et dans lequel le second chemin d'écoulement de surface latérale (41) comprend un chemin d'écoulement supérieur de surface latérale (41a) s'étendant dans une direction de longueur à l'intérieur du cadre de refroidissement de surface latérale (40) et relié au chemin d'écoulement supérieur (311a) du cadre composite (31), et un chemin d'écoulement inférieur de surface latérale (41b) s'étendant dans la direction de longueur à l'intérieur du cadre de refroidissement de surface latérale (40) et, au niveau d'une partie inférieure du chemin d'écoulement supérieur de surface latérale (41a) à relier au chemin d'écoulement inférieur (311b) du cadre composite (31), et éventuellement
le bloc-batterie (100, 200, 300) comprend en outre une partie de guidage de réfrigérant de surface latérale (47) d'un autre côté du cadre de refroidissement de surface latérale (40), dans lequel la partie de guidage de réfrigérant de surface latérale (47) est configurée pour changer une direction d'écoulement du réfrigérant s'écoulant à travers le chemin d'écoulement supérieur de surface latérale (41a) en une direction du chemin d'écoulement inférieur de surface latérale (41b).

11. Bloc-batterie (200, 300) selon la revendication 1 ou 4, dans lequel le chemin d'écoulement d'entrée (121, 221) comprend un premier chemin d'écoulement d'entrée (121a, 221a) s'étendant dans la première direction d'un côté de la plaque de refroidissement (112, 212) pour introduire le réfrigérant et relié au chemin d'écoulement de refoulement (123, 223), et un second chemin d'écoulement d'entrée (121b, 221b) s'étendant dans la première direction d'un autre côté de la plaque de refroidissement (112, 212) pour introduire le réfrigérant et relié au chemin d'écoulement de refoulement (123, 223), et dans lequel le chemin d'écoulement de refoulement (123, 223) comprend un premier chemin d'écoulement de refoulement (123a, 223a) s'étendant dans la première direction entre le premier chemin d'écoulement d'entrée (121a, 221a) et le second chemin d'écoulement d'entrée (121b, 221b) à l'intérieur de la plaque de refroidissement (112, 212) et relié au premier chemin d'écoulement d'entrée (121a, 221a) pour refouler le réfrigérant et un second chemin d'écoulement de refoulement (123b, 223b) s'étendant dans la première direction entre le premier chemin d'écoulement d'entrée (121a, 221a) et le second chemin d'écoulement d'entrée (121b, 221b) à l'intérieur de la plaque de refroidissement (112, 212) et relié au second chemin d'écoulement d'entrée (121b, 221b) pour refouler le réfrigérant, et éventuellement
la partie de liaison de chemin d'écoulement (14) comprend :
une première partie de liaison (141) couplée à l'extrémité de la plaque de refroidissement (112, 212) pour relier le premier chemin d'écoulement d'entrée (121a, 221a) et le second chemin d'écoulement d'entrée (121b, 221b) au chemin d'écoulement de surface latérale (311, 41) de la partie de cadre (30) ; et
une seconde partie de liaison (143) couplée à l'extrémité de la plaque de refroidissement (112, 212) pour relier le premier chemin d'écoulement de refoulement (123a, 223a) et le second chemin d'écoulement de refoulement (123b, 223b) au chemin d'écoulement de surface latérale (311, 41) de la partie de cadre (30).

12. Bloc-batterie (300) selon la revendication 1 ou 4, dans lequel le chemin d'écoulement d'entrée (221) comprend un premier chemin d'écoulement d'entrée (221a) s'étendant dans la première direction à l'intérieur d'une partie de bord de la plaque de refroidissement (212) de sorte que le réfrigérant soit introduit et relié au chemin d'écoulement de refoulement (223), un second chemin d'écoulement d'entrée (221b) s'étendant dans la première direction à l'intérieur d'une partie de bord d'un autre côté de la plaque de refroidissement (212) de sorte que le réfrigérant soit introduit et relié au chemin d'écoulement de refoulement (223), et un chemin d'écoulement d'entrée commun (222) comprenant deux chemins d'écoulement s'étendant dans la première direction à l'intérieur de la plaque de refroidissement (212) entre le premier chemin d'écoulement d'entrée (221a) et le second chemin d'écoulement d'entrée (221b) et reliés au chemin d'écoulement de refoulement (223), et
dans lequel le chemin d'écoulement de refoulement (223) comprend un premier chemin d'écoulement de refoulement commun (223a) s'étendant dans la première direction à l'intérieur de la plaque de refroidissement (212) entre le premier chemin d'écoulement d'entrée (221a) et le chemin d'écoulement d'entrée commun (222), et relié à chacun du premier chemin d'écoulement d'entrée (221a) et du chemin d'écoulement d'entrée commun (222) pour refouler le réfrigérant, et un second chemin d'écoulement de refoulement commun (223b) s'étendant dans la première direction à l'intérieur de la plaque de refroidissement (212) entre le second chemin d'écoulement d'entrée (221b) et le chemin d'écoulement d'entrée commun (222) et relié à chacun du second chemin d'écoulement d'entrée (221b) et du chemin d'écoulement d'entrée commun (222) pour refouler le réfrigérant, et éventuellement
la partie de liaison de chemin d'écoulement (14) comprend :
une première partie de liaison (141) couplée à l'extrémité de la plaque de refroidissement (212) pour relier le premier chemin d'écoulement d'entrée (221a), le second chemin d'écoulement d'entrée (221b) et le chemin d'écoulement d'entrée commun (222) au chemin d'écoulement de surface latérale (311, 41) de la partie de cadre (30) ; et
une seconde partie de liaison (143) couplée à l'extrémité de la plaque de refroidissement (212) pour relier le premier chemin d'écoulement de refoulement commun (223a) et le second chemin d'écoulement de refoulement commun (223b) au chemin d'écoulement de surface latérale (311, 41) de la partie de cadre (30).
